# EUROPÄISCHE PATENTSCHRIFT

(11) **EP 0 909 285 B1**
(45) Veröffentlichungstag und Bekanntmachung des Hinweises auf die Patenterteilung: **04.10.2000**
(21) Anmeldenummer: 97933647.6
(22) Anmeldetag: 02.07.1997
(51) Int. Cl.: C08F 10/02

(54) **VERFAHREN ZUR HERSTELLUNG VON CYCLOOLEFIN-(CO)POLYMEREN ZUR ANWENDUNG FÜR OPTISCHE DATENSPEICHER**
METHOD FOR PRODUCING CYCLOOLEFIN (CO)POLYMERS FOR USE IN OPTICAL DATA MEMORIES
PROCEDE POUR FABRIQUER DES (CO)POLYMERES DE CYCLO-OLEFINES DESTINES A DES MEMOIRES DE DONNEES OPTIQUES

(30) Priorität: 05.07.1996 DE 19627064; 05.04.1997 DE 19714058
(43) Veröffentlichungstag der Anmeldung: 21.04.1999
(73) Patentinhaber: BAYER AG, 51368 Leverkusen (DE)
(72) Erfinder: OSTOJA STARZEWSKI, Karl-Heinz, Aleksander, D-61118 Bad Vilbel (DE); KELLY, Warren, Mark, D-51373 Leverkusen (DE); STUMPF, Andreas, D-51375 Leverkusen (DE); SCHMID, Claudia, D-63939 Wörth (DE)
(86) Internationale Anmeldenummer: EP9703459
(87) Internationale Veröffentlichungsnummer: WO9801483

(56) Entgegenhaltungen:
- EP-A- 0 638 593
- DE-A- 4 420 456

## Beschreibung

Die vorliegende Erfindung bezieht sich auf den Einsatz von n-Systemen oder von Metallocen-Verbindungen, in denen ein Übergangsmetall mit zwei π-Systemen und zwar insbesondere mit aromatischen π-Systemen, wie anionischen Cyclopentadienyl-Liganden (Carbanionen), komplexiert ist und die beiden Systeme durch mindestens eine Brücke aus einem Donor und einem Akzeptor reversibel miteinander verbunden sind, als metallorganische Katalysatoren in einem Verfahren zur Herstellung von Cycloolefin-(Co)Polymeren zur Anwendung für optische Datenspeicher durch (Co)-Polymerisation von Monomeren aus der Gruppe der cyclischen Olefine, der α-Olefine mit 2 oder mehr C-Atomen und gegebenenfalls konjugierten oder nicht konjugierten Diolefine. Die zwischen dem Donoratom und dem Akzeptoratom entstehende koordinative Bindung erzeugt in der Donorgruppe eine positive (Teil)Ladung und in der Akzeptorgruppe eine negative (Teil)Ladung:

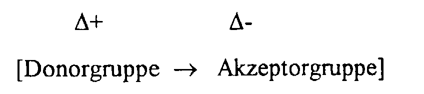

Cycloolefin-(Co)Polymere zeichnen sich durch viele vorteilhafte Eigenschaften aus, so durch eine hohe Transparenz zum Einsatz für ihre Anwendung auf dem Gebiet der optischen Datenspeicher, insbesondere für Compact Discs (CD) hoher Speicherdichte. Sie haben außerdem eine gute thermische Beständigkeit, Alterungsbeständigkeit, chemische Beständigkeit, Lösungsmittelbeständigkeit, geringe Wasseraufnahme, hohe Kratzfestigkeit, geringe Lichtdoppelbrechung und hohe Erweichungstemperaturen (Glasübergangstemperaturen T_{g}).

Metallocene und ihr Einsatz als Katalysatoren bei der Polymerisation von Olefinen sind seit langem bekannt (EP-A 129 368 und die darin zitierte Literatur). Aus EP-A '368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus 1 mol Trimethylaluminium und 1 mol Wasser Methylaluminoxan = MAO gebildet. Auch andere stöchiometrische Verhältnisse wurden schon mit Erfolg angewandt (WO 94/20506)). Es sind auch bereits Metallocene bekannt, deren Cyclopentadienylgerüste miteinander durch eine Brücke kovalent verknüpft sind. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt. Auch in EP '461 sind die verbrückten Metallocene als Polymerisationskatalysatoren für Olefine vorgesehen. Trotz der zahlreichen Patente und Anmeldungen auf diesem Gebiet besteht weiterhin der Wunsch nach verbesserten Katalysatoren, die sich durch hohe Aktivität auszeichnen, so daß die Menge des im Polymer verbleibenden Katalysators gering angesetzt werden kann, und die sich gleichermaßen für die (Co)Polymerisation von Cycloolefinen eignen, zu deren Herstellung ebenfalls bereits Metallocene eingesetzt wurden (US 5 567 777; EP 610 852 = US 5 602 219; EP 690 078).

DE-A-44 20 456 beschreibt eine zwitterionische Übergangsmetallverbindung, bei der eine anionische Metallgruppe mit einem perhalogenierten Kohlenwasserstoffrest über ein Heteroatom mit einem kationischen Übergangsmetall verbunden ist. Es werden keine Donor-Akzeptor-verbrückten Metallocene beschrieben.

EP-A-638 593 beschreibt die Verwendung von Heterocyclopentadienyl-haltigen Metallocenen zur Polymerisation von Olefinen. Es werden keine Donor-Akzeptor-verbrückten Metallocene beschrieben.

Es wurde nun gefunden, daß sich besonders vorteilhafte Katalysatoren aus verbrückten π-Komplex-Verbindungen und insbesondere von Metallocen-Verbindungen herstellen lassen, bei denen die Verbrückung der beiden π-Systeme durch eine, zwei oder drei reversible Donor-Akzeptor-Bindung hergestellt wird, in denen jeweils zwischen dem Donoratom und dem Akzeptoratom eine koordinative oder sogenannte dative Bindung entsteht, der zumindest formal eine ionische Bindung überlagert ist und bei denen eines der Donor- bzw. Akzeptoratome Teil des jeweils zugehörigen π-Systems sein kann. Die Reversibilität der Donor-Akzeptor-Bindung läßt neben dem durch den Pfeil zwischen D und A gekennzeichneten verbrückten Zustand auch den unverbrückten Zustand zu. Erfindungsgemäße einzusetzende π-Systeme, z.B. Metallocene lassen sich daher durch einen Doppelpfeil und die Formelteile (Ia) und (Ib) bzw. (XIIIa) und (XIIIb) zur Umfassung beider Zustände darstellen.

Die Erfindung betrifft demnach ein Verfahren zur Herstellung von Cycloolefin-(Co)Polymeren zur Anwendung für optische Datenspeicher durch (Co)Polymerisation von Monomeren aus der Gruppe der cyclischen Olefine, der α-Olefine mit 2 oder mehr C-Atomen und gegebenenfalls konjugierten oder nicht konjugierten Diolefine in der Gas-, Masse-, Lösungs- oder Slurryphase bei -78 bis +200°C und 0,5-70 bar in Gegenwart von metallorganischen Katalysatoren, die durch Cokatalysatoren aktiviert werden können, das dadurch gekennzeichnet ist, daß als metallorganische Katalysatoren Metallocen-Verbindungen der Formel 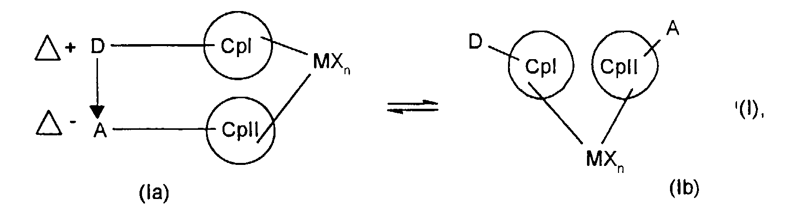 in der
- CpI und CpII: zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem C₁-C₂₀-Alkyl, das 1-fach bis vollständig durch Halogen, 1-3 fach durch Phenyl sowie 1-3fach durch Vinyl substituiert sein kann, C₆-C₁₂-Aryl, Halogenaryl mit 6 bis 12C-Atomen, Organometall-Substituenten, wie Silyl, Trimethylsilyl, Ferrocenyl sowie 1- oder 2-fach durch D und A substituiert sein können,
- D: ein Donoratom bedeutet, das zusätzlich Substituenten tragen kann und das in seinem jeweiligen Bindungszustand mindestens über ein freies Elektronenpaar verfügt,
- A: ein Akzeptoratom bedeutet, das zusätzlich Substituenten tragen kann und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen,
- M: für ein Übergangsmetall der III., IV., V. oder VI. Nebengruppe des Periodensystems der Elemente (Mendelejew) einschließlich der Lanthaniden und Actiniden steht,
- X: ein Anionäquivalent bedeutet und
- n: in Abhängigkeit von der Ladung von M die Zahl Null, Eins, Zwei, Drei oder Vier bedeutet,
oder π-Komplex-Verbindungen und insbesondere Metallocen-Verbindungen der Formel 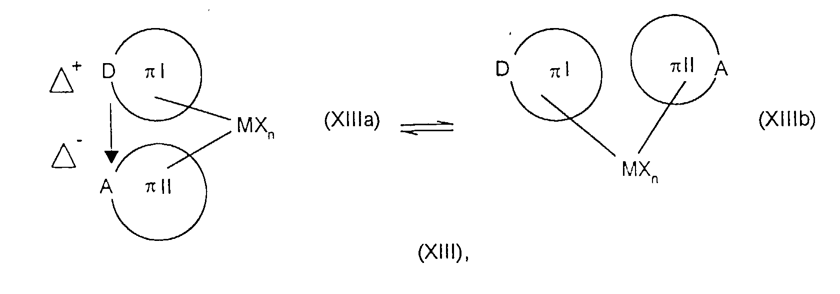 in der
- πI und πII: voneinander verschiedene geladene oder elektrisch neutrale π-Systeme ausgewählt aus der Gruppe substituiertes und nicht-substituiertes Ethylen, Allyl, Pentadienyl, Benzyl, Butadien, Benzol, das Cyclopentadienylanion und die sich durch Ersatz mindestens eines C-Atoms durch ein Heteroatom ergebende Spezies darstellen, die ein- oder zweifach mit ungesättigten oder gesättigten Fünf- oder Sechsringen kondensiert sein können,
- D: ein Donoratom bedeutet, das Substituent von πI oder Teil des π-Systems von πI ist und das in seinem jeweiligen Bindungszustand mindestens über ein freies Elektronenpaar verfügt,
- A: ein Akzeptoratom bedeutet, das Substituent von πII oder Teil des π-Systems von πII ist und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem C₁-C₂₀-Alkyl, das 1-fach bis vollständig durch Halogen, 1-3fach durch Phenyl sowie 1-3fach durch Vinyl substituiert sein kann, C₆-C₁₂-Aryl, Halogenaryl mit 6 bis 12 C-Atomen, Organometall-Substituenten, wie Silyl, Trimethylsilyl, Ferrocenyl sowie ein- oder zweifach durch D und A substituiert sein können, so daß die reversible koordinative D→A-Bindung (i) zwischen D und A, die beide Teile des jeweiligen π-Systems oder des ankondensierten Ringsystems sind, oder (ii) von denen D oder A Teil des π-Systems oder des ankondensierten Ringsystems und das jeweils andere Substituent des nicht kondensierten π-Systems oder des ankondensierten Ringsystems ist (sind), ausgebildet wird,
- M und X: die obige Bedeutung haben und
- n: in Abhängigkeit von den Ladungen von M sowie denen von π-I und π-II die Zahl Null, Eins, Zwei, Drei oder Vier bedeutet,
eingesetzt werden.

Erfindungsgemäße π-Systeme sind substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies. Unter den genannten Spezies sind die cyclischen bevorzugt. Die Art der Koordination solcher Liganden (π-Systeme) zum Metall kann vom σ-Typ oder vom π-Typ sein.

Solche erfindungsgemäß einzusetzenden Metallocen-Verbindungen der Formel (I) können hergestellt werden, indem man entweder je eine Verbindung der Formeln (II) und (III) 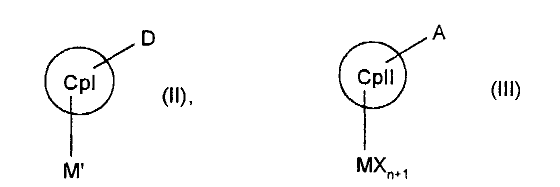 oder je eine Verbindung der Formeln (IV) und (V) 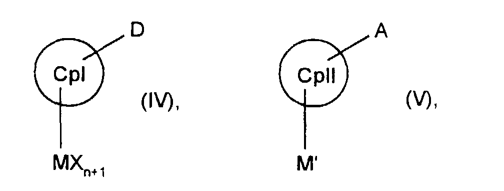 oder je eine Verbindung der Formeln (VI) und (VII) 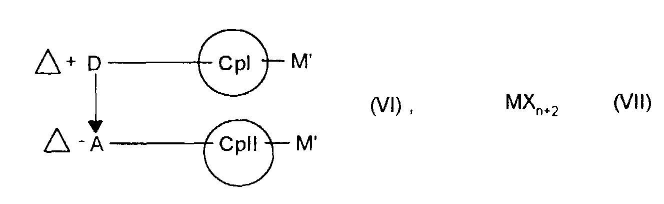 unter Austritt von M'X in Gegenwart eines aprotischen Lösungsmittels oder je eine Verbindung der Formeln (VIII) und (III) 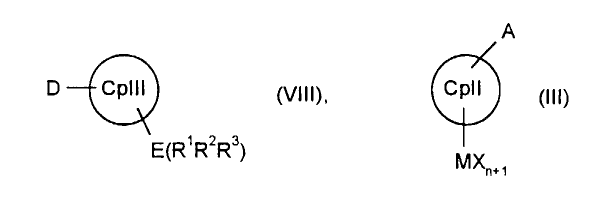 oder je eine Verbindung der Formeln (IV) und (IX) 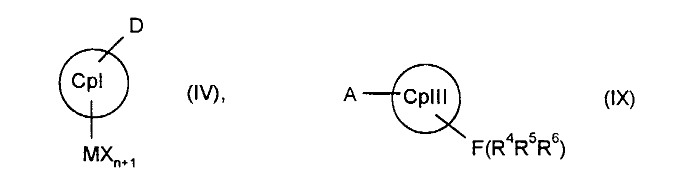 oder je eine Verbindung der Formeln (X) und (VII) 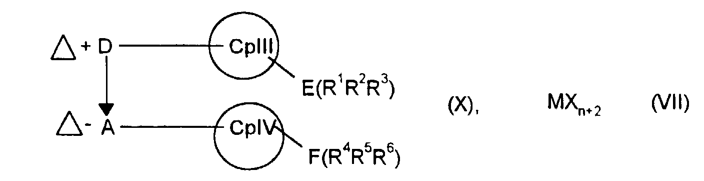 unter Austritt von E(R¹R²R³)X und F(R⁴R⁵R⁶)X in Abwesenheit oder in Gegenwart eines aprotischen Lösungsmittels miteinander umsetzt, wobei
Cpl, CpII, D, A, M, X und n die obige Bedeutung haben,
CpIII und CpIV zwei gleiche oder verschiedene ungeladene Molekülteile mit einer Cyclopentadien-haltigen Struktur darstellen, ansonsten aber CpI und CpII gleichen,
M' ein Kationäquivalent eines (Erd)Alkalimetalls oder Tl bedeutet,
E und F unabhängig voneinander eines der Elemente Si, Ge oder Sn bedeuten und
R¹, R², R³, R⁴, R⁵ und R⁶ unabhängig voneinander für geradkettiges oder verzweigtes C₁-C₂₀-Alkyi, C₆-C₁₂-Aryl sowie C₁-C₆-Alkyl-C₆-C₁₂-Aryl und C₆-C₁₂-Aryl-C₁-C₆-Alkyl, Vinyl, Allyl oder Halogen stehen,
wobei weiterhin in den Formeln (VIII), (IX), (X) anstelle von E(R¹R²R³) und F(R⁴R⁵R⁶) Wasserstoff stehen kann und in diesem Falle X auch für ein Amidanion vom Typ R₂N^{θ} oder ein Carbanion vom Typ R₃C^{θ} oder ein Alkoholatanion vom Typ RO^{θ} stehen kann, und wobei es weiterhin möglich ist, Verbindungen der Formeln (II) oder (VIII) in Gegenwart von Verbindungen der Formeln (V) oder (IX) direkt mit einer Übergangsmetall-Verbindung der Formel (VII) umzusetzen. Zwei Anionen X können ferner, gegebenenfalls unter Zwischenschaltung einer ein- oder mehratomigen Brücke, zu einem Dianion verbunden sind.

Bei der Reaktion von (VIII) mit (III) bzw. (IV) mit (IX) bzw. (X) mit (VII) bildet sich bei der zuletzt genannten Variante die Struktur (I) unter Austritt von Amin R₂NH bzw. R₂NE(R¹R²R³) bzw. R₂NF(R⁴R⁵R⁶) oder einer Kohlenwasserstoffverbindung der Formel R₃CH bzw. R₃CE(R¹R²R³) bzw. R₃CF(R⁴R⁵R⁶) oder eines Ethers ROE(R¹R²R³) bzw. ROF(R⁴R⁵R⁶), worin die organischen Reste R gleich oder verschieden und unabhängig voneinander C₁-C₂₀-Alkyl, C₆-C₁₂-Aryl, substituiertes oder unsubstituiertes Allyl, Benzyl oder Wasserstoff sind. Beispiele für austretendes Amin oder Kohlenwasserstoff, Ether, Silan, Stannan oder German sind etwa Dimethylamin, Diethylamin, Di-(n-propyl)-amin, Di-(isopropyl)-amin, Di-(tertiärbutyl)-amin, Tertiärbutylamin, Cyclohexylamin, Anilin, Methyl-phenyl-amin, Di-(allyl)-amin bzw. Methan, Toluol, Trimethylsilylamin, Trimethylsilylether, und Tetramethylsilan.

Es ist auch möglich, Verbindungen der Formeln (II) oder (VIII) in Gegenwart von Verbindungen der Formeln (V) oder (IX) direkt mit einer Übergangsmetall-Verbindung der Formel (VII) umzusetzen.

π-Komplex-Verbindungen der Formel (XIII), in denen die π-Systeme cyclisch und aromatisch sind (Metallocene), können analog hergestellt werden, wobei sinngemäß die folgenden Verbindungen eingesetzt werden:

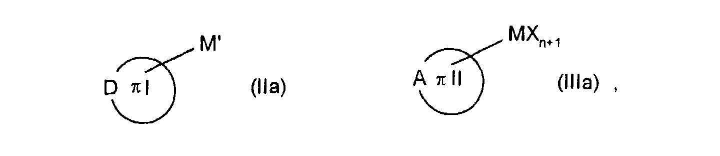

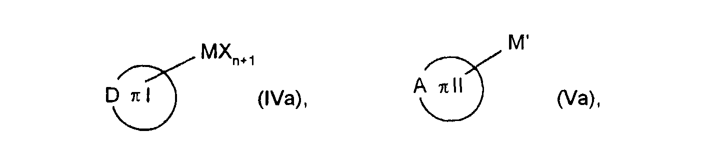

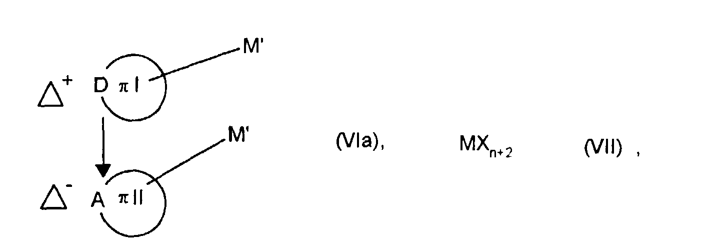

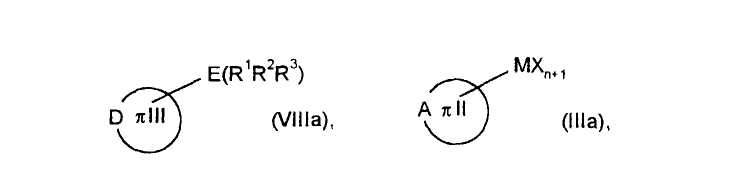

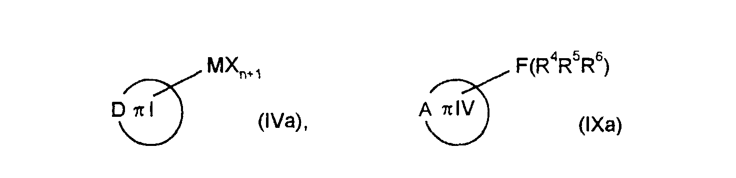

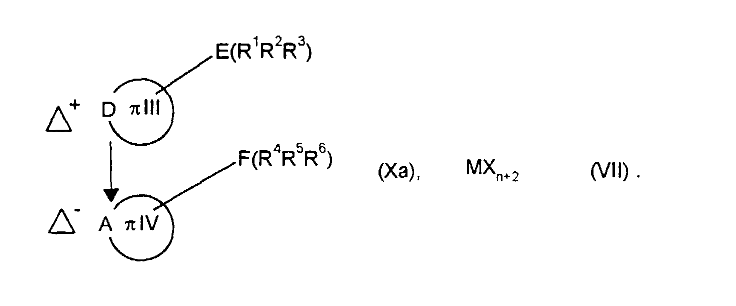

Die Herstellung offenkettiger π-Komplex-Verbindungen erfolgt nach den fachmännisch bekannten Verfahren unter Einbau von Donor- und Akzeptorgruppen.

Erfindungsgemäß wird in der Gas-, Masse-, Lösungs- oder Slurry-Phase bei -78 bis +200°C, bevorzugt -50 bis +150°C, besonders bevorzugt -30 bis +100°C, und 0,5 bis 70 bar, bevorzugt 1 bis 50 bar, besonders bevorzugt 1 bis 20 bar, und in Gegenwart oder Abwesenheit von gesättigten oder aromatischen Kohlenwasserstoffen oder von gesättigten oder aromatischen Halogenkohlenwasserstoffen und in Gegenwart oder Abwesenheit von Wasserstoff gearbeitet, wobei die Metallocen-Verbindungen bzw. die π-Komplex-Verbindungen als Katalysatoren in einer Menge von 10¹ bis 10¹² mol aller Monomerer pro mol Metallocen bzw. π-Komplex-Verbindungen eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann.

Solche Lewis-Säuren sind beispielsweise Borane oder Alane, wie Aluminiumalkyle, Aluminiumhalogenide, Aluminiumalkoholate, Bororganyle, Borhalogenide, Borsäureester oder Bor- bzw. Aluminium-Verbindungen, die sowohl Halogenid- als auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein Metalloceniumkation ausbilden, das durch ein sperriges, schlecht koordinierendes Anion ladungskompensiert wird.

Erfindungsgemäß können weiterhin die Reaktionsprodukte solcher ionisierender Agentien mit Metallocen-Verbindungen der Formel (I) bzw. (XIII) eingesetzt werden. Sie lassen sich durch die Formeln (XIa) bis. (XId) beschreiben 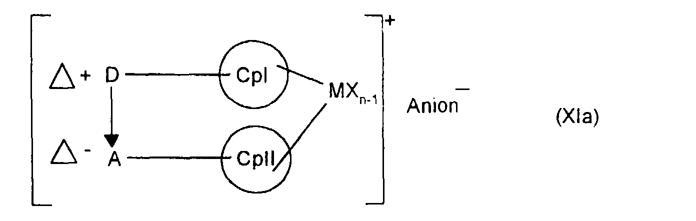 oder 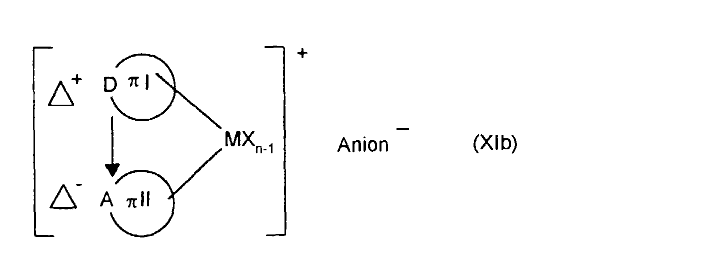 bzw. 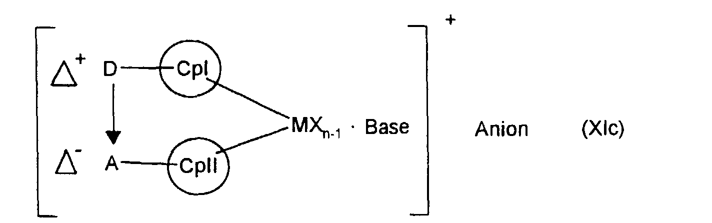 oder 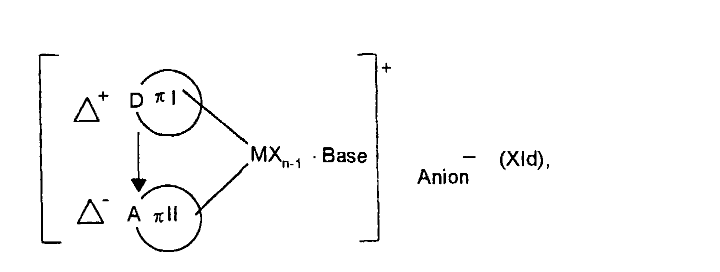 in denen
Anion für das gesamte sperrige, schlecht koordinierende Anion und Base für eine Lewis-Base stehen.

Die erfindungsgemäß einsetzbaren Metallocen-Verbindungen (I) bzw. (XIII) können sowohl in monomerer, dimerer als auch oligomerer Form vorliegen.

Beispiele für solche schlecht koordinierenden Anionen sind z.B.

B (C₆H₅)₄^{⊖}, B(C₆F₅)₄^{⊖}, B(CH₃)(C₆F₅)₃^{⊖} , 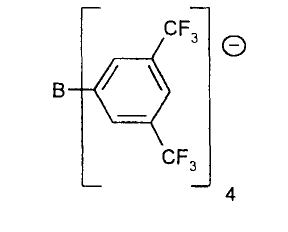 oder Sulfonate, wie Tosylat oder Triflat, Tetrafluorborate, Hexafluorphosphate oder -antimonate, Perchlorate, sowie voluminöse Cluster-Molekülanionen vom Typ der Carborane, beispielsweise C₂B₉H₁₂^{θ} oder CB₁₁H₁₂^{θ}. Beim Vorliegen solcher Anionen können Metallocen-Verbindungen auch bei Abwesenheit von Aluminoxan als hochwirksame Polymerisationskatalystoren wirken. Das ist vor allem dann der Fall, wenn ein X-Ligand eine Alkylgruppe, Allyl oder Benzyl darstellt. Es kann aber auch vorteilhaft sein, solche Metallocen-Komplexe mit voluminösen Anionen in Kombination mit Aluminiumalkylen, wie (CH₃)₃Al, C₂H₅)₃Al, (n-/i-Propyl)₃Al, (n-/t-Butyl)₃Al, (i-Butyl)₃Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab. Metallalkyle der beschriebenen Art können auch vorteilhaft in Kombination mit Aluminiumoxan-Cokatalysatoren eingesetzt werden, etwa um die benötigte Menge an Aluminoxan zu erniedrigen. Beispiele für Borverbindungen, bei deren Verwendung solche Anionen eingeführt werden, sind:
Triethylammonium-tetraphenylborat,
Tripropylammonium-tetraphenylborat,
Tri(n-butyl)ammonium-tetraphenyborat,
Tri(t-butyl)ammonium-tetraphenylborat,
N,N-Dimethylanilinium-tetraphenylborat,
N,N-Diethylanilinium-tetraphenylborat,
N,N-Dimethyl(2,4,6-trimethylanilinium)tetraphenylborat,
Trimethylammonium-tetrakis(pentafluorophenyl)borat, Triethylammonium-tetrakis-(pentafluorophenyl)borat,
Tripropylammonium-tetrakis(pentafluorophenyl)borat,
Tri(n-butyl)ammonium-tetrakis(pentafluorophenyl)borat, Tri(sec-butyl)ammonium-tetrakis(pentafluorophenyl)borat,
N,N-Dimethylanilinium-tetrakis(pentafluorophenyl)borat,
N,N-Diethylanilinium-tetrakis(pentaflurophenyl)borat, N,N-dimethyl(2,4,5-trimethylanilinium)-tetrakis(pentafluorophenyl)borat,
Trimethylammonium-tetrakis(2,3,4,6-tetrafluorophenyl)borat,
Triethylammonium-tetrakis (2,3,46-tetrafluorophenyl)borat,
Tripropylmmonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,NDiethylanilinium-tetrakis(2,3,4,6-tetrafluorophenyl)borat,
N,N-Dimethyl-(2,4,6-trimethylanilinium)-tetrakis-(2,3,4,6-tetrafluorophenyl)borat;
Dialkylammonium-Salze, wie:
Di-(i-propyl)ammonium-tetrakis(pentafluorophenyl)borat und
Dicyclohexylammonium-tetrakis(pentafluorophenyl)borat;
Tri-substituierte Phosphonium-Salze, wie:
Triphenylphosphonium-tetrakis(pentafluorophenyl)borat,
Tri(o-tolyl)phosphonium-tetrakis(pentafluorophenyl)borat,
Tri(2,6-dimethylphenyl)phosphonium-tetrakis(pentafluorophenyl)borat,
Tritolylmethyl-tetrakis(pentafluorphenyl)borat,
Triphenylmethyl-tetraphenylborat (Trityl-tetraphenylborat),
Trityl-tetrakis(pentafluorphenyl)borat,
Silber-tetrafluorborat,
Tris(pentafluorphenyl)boran,
Tris(trifluormethyl)boran.

Die erfindungsgemäß einzusetzenden Metallocen-Verbindungen bzw. π-Komplex-Verbindungen können isoliert als Reinstoffe zur (Co)Polymerisation eingesetzt werden. Es ist aber auch möglich, sie "in situ" im (Co)Polymerisationsreaktor in einer dem Fachmann bekannten Weise zu erzeugen und zu verwenden.

Das erste und das zweite Carbanion CpI und CpII mit einem Cyclopentadienylgerüst können gleich oder verschieden sein. Das Cyclopentadienylgerüst kann beispielsweise eines aus der Gruppe von Cyclopentadien, substituiertem Cyclopentadien, Inden, substituiertem Inden, Fluoren und substituiertem Fluoren sein. Als Substituenten seien 1 bis 4 je Cyclopentadien- bzw. ankondensiertem Benzolring genannt. Diese Substituenten können C₁-C₂₀-Alkyl, wie Methyl, Ethyl, Propyl, Isopropyl, Butyl oder iso-Butyl, Hexyl, Octyl, Decyl, Dodecyl, Hexadecyl, Octadecyl, Eicosyl, C₁-C₂₀-Alkoxy, wie Methoxy, Ethoxy, Propoxy, Isopropoxy, Butoxy oder iso-Butoxy, Hexoxy, Octyloxy, Decyloxy, Dodecyloxy, Hexadecyloxy, Octadecyloxy, Eicosyloxy, Halogen, wie Fluor, Chlor oder Brom, C₆-C₁₂-Aryl, wie Phenyl, C₁-C₄-Alkylphenyl, wie Tolyl, Ethylphenyl, (i-)Propylphenyl, (i-,tert.-)Butylphenyl, Xylyl, Halogenphenyl, wie Fluor-, Chlor-, Bromphenyl, Naphthyl oder Biphenylyl, Triorganyl-silyl, wie Trimethylsilyl (TMS), Ferrocenyl sowie D bzw. A, wie oben definiert, sein. Ankondensierte aromatische Ringe können ferner teilweise oder vollständig hydriert sein, so daß lediglich die Doppelbindung bestehen bleibt, an der sowohl der ankondensierte Ring als auch der Cyclopentadienring Anteil haben. Weiterhin können Benzolringe, wie im Inden oder Fluoren, einen oder zwei ankondensierte weitere Benzolringe enthalten. Noch weiterhin können der Cyclopentadien- bzw. Cyclopentadienylring und ein ankondensierter Benzolring gemeinsam einen weiteren Benzolring ankondensiert enthalten.

Solche Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methylcyclopentadienyl, 1,2-Dimethyl-cyclopentadienyl, 1,3-Dimethyl-cyclopentadienyl, Indenyl, Phenylindenyl, 1,2-Diethyl-cyclopentadienyl, Tetramethyl-cyclopentadienyl, Ethyl-cyclopentadienyl, n-Butyl-cyclopentadienyl, n-Octyl-cyclopentadienyl, β-Phenylpropyl-cyclopentadienyl, Tetrahydroindenyl, Propyl-cyclopentadienyl, t-Butylcyclopentadienyl, Benzyl-cyclopentadienyl, Diphenylmethyl-cyclopentadienyl, Trimethylgermyl-cyclopentadienyl, Trimethylstannyl-cyclopentadienyl, Trifluormethylcyclopentadienyl, Trimethylsilyl-cyclopentadienyl, Pentamethylcyclopentadienyl, Fluorenyl, Tetrahydro- bzw. Octahydro-fluorenyl, am Sechsring benzoanellierte Fluorenyle und Indenyle, N,N-Dimethylamino-cyclopentadienyl, Dimethylphosphinocyclopentadienyl, Methoxy-cyclopentadienyl, Dimethylboranyl-cyclopentadienyl, (N,N-Dimethylaminomethyl)-cyclopentadienyl.

Neben der obligatorisch vorhandenen ersten Donor-Akzeptor-Bindung zwischen D und A können weitere Donor-Akzeptor-Bindungen gebildet werden, wenn zusätzliche D und/oder A als Substituenten der jeweiligen Cyclopentadiensysteme oder Substituenten oder Teile des π-Systems vorliegen. Alle Donor-Akzeptor-Bindungen sind durch ihre oben dargestellte Reversibilität gekennzeichnet. Für den Fall mehrerer D bzw. A können diese verschiedene der genannten Positionen einnehmen. Die Erfindung umfaßt demnach sowohl die verbrückten Molekül-Zustände (Ia) bzw. (XIIIa) als auch die unverbrückten Zustände (Ib) bzw. (XIIIb). Die Anzahl der D-Gruppen kann gleich oder verschieden zur Anzahl der A-Gruppen sein. In bevorzugter Weise werden CpI und CpII bzw. πI und πII über nur eine Donor-Akzeptor-Brücke verknüpft.

Neben den erfindungsgemäßen D/A-Brücken können auch kovalente Brücken vorliegen. In diesem Falle verstärken die D/A-Brücken die Stereorigidität und die Thermostabilität des Katalysators. Beim Wechsel zwischen geschlossener und geöffneter D/A-Bindung werden Sequenzpolymere bei Copolymeren mit unterschiedlicher chemischer Zusammensetzungen zugänglich.

Die π-Komplex-Verbindungen sind ebenfalls gekennzeichnet durch das Vorliegen mindestens einer koordinativen Bindung zwischen Donoratom(en) D und Akzeptoratom(en) A. Sowohl D als auch A können hierbei Substituenten ihrer jeweils zugehörigen π-Systeme πI bzw. πII oder Teil des π-Systems sein, wobei jedoch stets mindestens eines von D und A Teil des π-Systems ist. Als π-System wird hierbei das gesamte, gegebenenfalls ein- oder zweifach kondensierte π-System verstanden. Hieraus ergeben sich folgende Ausführungsformen:
- D ist Teil des π-Systems, A ist Substituent des π-Systems;
- D ist Substituent des π-Systems, A ist Teil des π-Systems;
- D und A sind Teile ihres jeweiligen π-Systems.

Beispielsweise seien folgende heterocyclische Ringsysteme genannt, in denen D oder A Teile des Ringsystems sind:

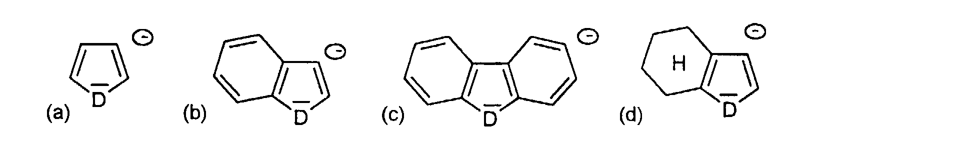

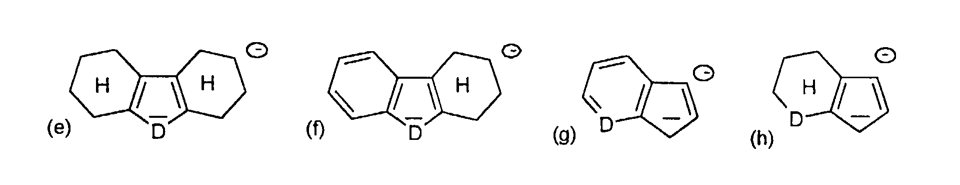

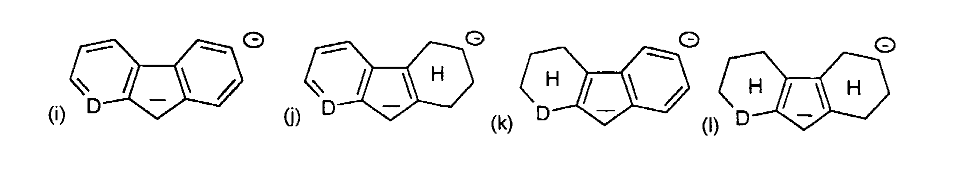

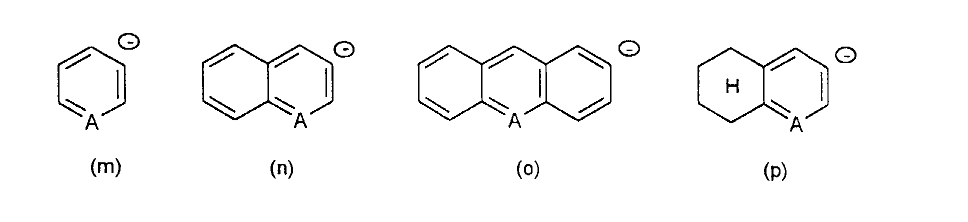

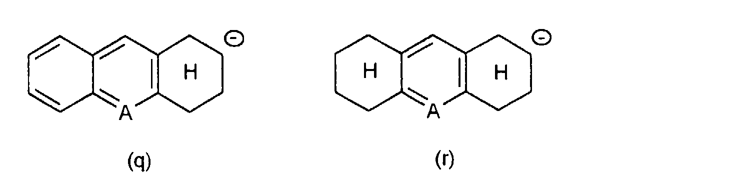

Wichtige heterocyclische Ringsysteme sind die mit (a), (b), (c), (d), (g), (m), (n) und (o) bezeichneten Systeme; besonders wichtige sind die mit (a), (b), (c) und (m) bezeichneten.

Für den Fall, daß eines von D und A Substituent seines zugehörigen Ringsystems ist, ist das Ringsystem 3-, 4-, 5-, 6-, 7- oder 8-gliedrig mit oder ohne elektrische Ladung, das in der angegebenen Weise weiter substituiert und/oder kondensiert sein kann. Bevorzugt sind 5- und 6-gliedrige Ringsysteme. Besonders bevorzugt ist das negativ geladene Cyclopentadienyl-System.

Das erste bzw. das zweite π-System πI und πII, falls es als Ringsystem ausgebildet ist, kann für den Fall, daß eines von D und A Substituent des Ringsystems ist, CpI bzw. CpII entsprechen.

Als Donorgruppen kommen vor allem solche in Frage, bei denen das Donoratom D ein Element der 5., 6, oder 7., bevorzugt der 5. oder 6. Hauptgruppe des Periodensystems der Elemente (Mendelejew) ist und mindestens ein freies Elektronenpaar besitzt und wobei sich das Donoratom im Falle von Elementen der 5. Hauptgruppe in einem Bindungszustand mit Substituenten befindet und im Falle von Elementen der 6. Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-Cp" die Bindung an das Cyclopentadienyl-haltige Carbanion darstellen, ein Strich mit einem Pfeil, die in Formel (I) angegebene Bedeutung einer koordinativen Bindung hat und sonstige Striche vorhandene Elektronenpaare bedeuten:

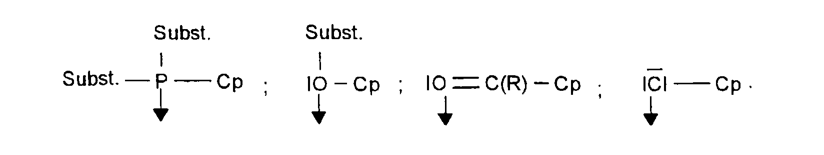

Als Akzeptorgruppen kommen vor allem solche in Frage, deren Akzeptoratom A ein Element aus der 3. Hauptgruppe des Periodensystems der Elemente (Mendeljew), wie Bor, Aluminium, Gallium, Indium und Thallium ist, sich in einem Bindungszustand mit Substituenten befindet und eine Elektronenlücke besitzt.

D und A sind durch eine koordinative Bindung verknüpft, wobei D eine positive (Teil)Ladung und A eine negative (Teil)Ladung annehmen.

Es wird demnach zwischen dem Donoratom D und der Donorgruppe bzw zwischen dem Akzeptoratom A und der Akzeptorgruppe unterschieden. Die koordinative Bindung D → A wird zwischen dem Donoratom D und dem Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Die Bindung zwischen dem Donoratom bzw. dem Akzeptoratom und dem Cyclopentadienyl-haltigen Carbanion kann durch Spacergruppen im Sinne von D-Spacer-Cp bzw. A-Spacer-Cp unterbrochen sein. Im dritten der obigen Formelbeispiele stellt =C(R)- einen solchen Spacer zwischen O und Cp dar. Solche Spacergruppen sind beispielsweise:

Dimethylsilyl, Diethylsilyl, Di-n-propylsilyl, Diisopropylsilyl, Di-n-butylsilyl, Di-t-butylsilyl, Di-n-hexylsilyl, Methylphenylsilyl, Ethylmethylsilyl, Diphenylsilyl, Di(p-t-butylphenethylsilyl), n-Hexylmethylsilyl, Cyclopentamethylensilyl, Cyclotetramethylensilyl, Cyclotrimethylensilyl, Dimethylgermanyl, Diethylgermanyl, Phenylamino, t-Butylamino, Methylamino, t-Butylphosphino, Ethylphosphino, Phenylphosphino, Methylen, Dimethylmethylen (i-Propyliden), Diethylmethylen, Ethylen, Dimethylethylen, Diethylethylen, Dipropylethylen, Propylen, Dimethylpropylen, Diethylpropylen, 1,1-Dimethyl-3,3-dimethylpropylen, Tetramethyldisiloxan, 1,1,4,4-Tetramethyldisilylethylen, Diphenylmethylen.

In bevorzugter Weise sind D bzw. A ohne Spacer an das Cyclopentadienyl-haltige Carbanion gebunden.

D bzw. A können unabhängig voneinander am Cyclopentadien(yl)ring oder einem ankondensierten Benzolring oder einem anderen Substituenten von CpI bzw. CpII oder π1 bzw. πII sitzen. Für den Fall mehrerer D bzw. A können diese verschiedene der genannten Positionen einnehmen.

Substituenten an den Donoratomen N, P, As, Sb, Bi, O, S, Se bzw. Te und an den Akzeptoratomen B, Al, Ga, In bzw. Tl sind beispielsweise: C₁-C₁₂(Cyclo)Alkyl, wie Methyl, Ethyl, Propyl, i-Propyl, Cyclopropyl, Butyl, i-Butyl, tert.-Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden C₁-C₁₂-Alkoxy-Gruppen; Vinyl, Butenyl, Allyl; C₆-C₁₂-Aryl, wie Phenyl, Naphthyl oder Biphenylyl, Benzyl, die durch Halogen, 1 oder 2 C₁-C₄-Alkylgruppen, C₁-C₄-Alkoxygruppen, Nitro oder Halogenalkylgruppen, C₁-C₆-Alkyl-carboxy, C₁-C₆-Alkyl-carbonyl oder Cyano substituiert sein können (z.B. Perfluorphenyl, m,m'-Bis(trifluormethyl)-phenyl und analoge, dem Fachmann geläufige Substituenten); analoge Aryloxygruppen; Indenyl; Halogen, wie F, Cl, Br und I, 1-Thienyl, disubstituiertes Amino, wie (C₁-C₁₂-Alkyl)₂amino, Diphenylamino, Tris-(C₁-C₁₂ -alkyl)-silyl, NaSO₃-Aryl, wie NaSO₃-Phenyl und NaSO₃-Tolyl, C₆H₅-C≡C-; aliphatisches und aromatisches C₁-C₂₀-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über -CH₂- an das Donoratom bzw. das Akzeptoratom gebunden sind, beispielsweise (CH₃)₃SiCH₂-, (C₁-C₁₂-Alkyl)(phenyl)amino, (C₁-C₁₂-Alkylphenyl)₂amino, C₆-C₁₂-Aryloxy mit den obengenannten Arylgruppen, C₁-C₈-Perfluoralkyl, Perfluorphenyl. Bevorzugte Substituenten sind: C₁-C₆-Alkyl, C₅-C₆-Cycloalkyl, Phenyl, Tolyl, C₁-C₆-Alkoxy, C₆-C₁₂-Aryloxy, Vinyl, Allyl, Benzyl, Perfluorphenyl, F, Cl, Br, Di-(C₁-C₆-alkyl)-amino, Diphenylamino.

Donorgruppen sind solche, bei denen das freie Elektronenpaar am N, P, As, Sb, Bi, O, S, Se, Te, F Cl, Br, I lokalisiert ist; bevorzugt hiervon sind N, P, O, S. Beispielhaft als Donorgruppen seien genannt: (CH₃)₂N-, (C₂H₅)₂N-, (C₃H₇)₂N-, (C₄H₉)₂N-, (C₆H₅)₂N-, (CH₃)₂P-, (C₂H₅)₂P-, (C₃H₇)₂P-, (i-C₃H₇)₂P-, (C₄H₉)₂P-, (t-C₄H₉)₂P-, (Cyclohexyl)₂P-, (C₆H₅)₂P-, CH₃O-, CH₃S-, C₆H₅S-, -C(C₆H₅)=O, -C(CH₃)=O, -OSi(CH₃)₃, -OSi(CH₃)₂-t-butyl, in denen N und P je ein freies Elektronpaar und 0 und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die von N verschiedenen Ringglieder ebenfalls als Spacer wirken.

Akzeptorgruppen sind solche, bei denen eine Elektronenpaar-Lücke am B, Al, Ga, In oder Tl, bevorzugt B, Al vorhanden ist; beispielhaft seien genannt: (CH₃)₂B-, (C₂H₅)₂B-, H₂B-, (C₆H₅)₂B-, (CH₃)(C₆H₅)B-, (Vinyl)₂B-, (Benzyl)₂B-, Cl₂B-, (CH₃O)₂B-, Cl₂Al-, (CH₃)Al-, (i-C₄H₉)₂Al-, (Cl)(C₂H₅)₂Al-, (CH₃)₂Ga-, (C₃H₇)₂Ga-, ((CH₃)₃Si-CH₂)₂Ga-, (Vinyl)₂Ga-, (C₆H₅)₂Ga-, (CH₃)₂In-, ((CH₃)₃Si-CH₂)₂In-, (Cyclopentadienyl)₂In-.

Weiterhin kommen solche Donor- und Akzeptorgruppen in Frage, die chirale Zentren enthalten oder in denen 2 Substituenten mit. dem D- bzw. A-Atom einen Ring bilden. Beispiele hierfür sind etwa

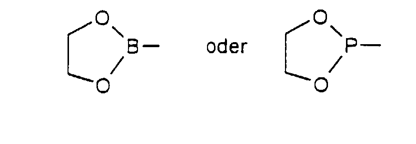

Bevorzugte Donor-Akzeptor-Brücken zwischen CpI und CpII sind beispielsweise folgende:

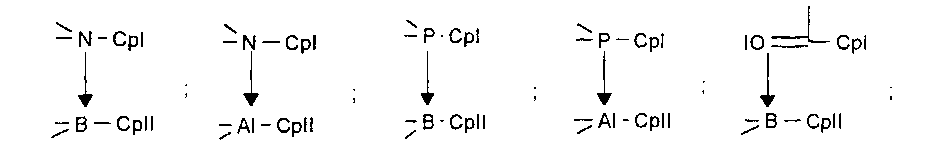

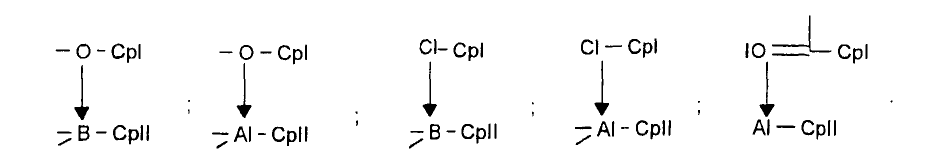

Eines oder beide π-Systeme πI bzw. πII kann als Heterocyclus in Form der obigen Ringsysteme (a) bis (r) vorliegen. D ist hierbei bevorzugt ein Element der 5. oder 6. Hauptgruppe des Periodensystems der Elemente (Mendelejew); A ist hierbei bevorzugt Bor. Einzelbeispiele für solche Hetero-π-Systeme, insbesondere Heterocyclen sind:

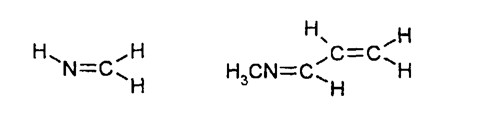

RH₄C₆N=CH-HC=HC-C₆H₄R'

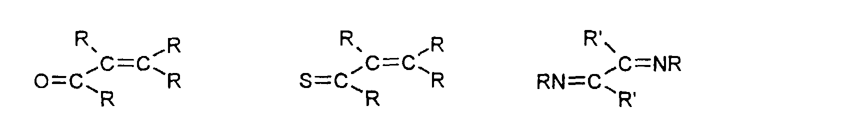

- R, R' =: H, Alkyl, Aryl, Alkaryl z.B. Methyl, Ethyl, t-Butyl, Phenyl, o,o'-Di-(i-Propyl)-phenyl

Beispiele für Heterocyclen sind: Pyrrolyl, Methylpyrrolyl, Dimethylpyrrolyl, Trimethylpyrrolyl, Tetramethylpyrrolyl, t-Butylpyrrolyl, Di-t-butylpyrrolyl, Indolyl, Methylindolyl, Dimethylindolyl, t-Butylindolyl, Di-t-butylindolyl, Tetramethylphospholyl, Tetraphenylphospholyl, Triphenylphospholyl, Trimethylphospholyl, Phosphaindenyl, Dibenzophospholyl (Phosphafluorenyl), Dibenzopyrrolyl.

Bevorzugte Donor-Akzeptor-Brücken zwischen πI und πII sind beispielsweise folgende:
N → B, N → Al, P → B, P → Al, O → B, O → Al, Cl → B, Cl → Al, C=O→B, C=O→Al, wobei beide Atome dieser Donor-Akzeptor-Brücken Teile eines Heteroπ-Systems sein können oder ein Atom (Donor oder Akzeptor) Teil eines π-Systems ist und das andere Substituent des zweiten π-Systems ist oder wobei beide Atome Substituenten ihres jeweiligen Ringes sind und zusätzlich einer der Ringe ein Heteroatom enthält.

Die beiden Liganden-Systeme πI und πII können gemäß obiger Darstellung durch eine, zwei oder drei Donor-Akzeptor-Brücken verknüpft sein. Dies ist möglich, da erfindungsgemäß die Formel (Ia) die dargestellte D → A - Brücke enthält, die Liganden-Systeme πI bzw. πII aber weitere D und A als Substituenten oder Hetero-π-Zentren tragen können; die Zahl der sich daraus ergebenden zusätzlichen D → A - Brücken beträgt Null, Eins oder Zwei. Die Anzahl von D- bzw. A-Substituenten auf πI bzw. πII kann gleich oder verschieden sein. Die beiden Liganden-Systeme πI und πII können zusätzlich kovalent verbrückt sein. (Beispiele für kovalente Brücken sind weiter oben als Spacergruppen beschrieben.) Bevorzugt sind jedoch Verbindungen ohne kovalente Brücke, in denen demnach πI und πII über nur eine Donor-Akzeptor-Brücke verknüpft sind.

M steht für ein Übergangsmetall aus der 3., 4., 5, oder 6. Nebengruppe des Periodensystems der Elemente (Mendelejew), einschließlich der Lanthaniden und Actiniden; beispielhaft seien genannt: Sc, Y, La, Sm, Nd, Lu, Ti, Zr, Hf, Th, V Nb, Ta, Cr. Bevorzugt sind Ti, Zr, Hf, V, Nb und Ta.

Bei der Ausbildung der Metallocen-Struktur bzw. der π-Komplex-Struktur wird je eine positive Ladung des Übergangsmetalls M durch je ein Cyclopentadienyl-haltiges Carbanion kompensiert. Noch verbleibende positive Ladungen am Zentralatom M werden durch weitere, zumeist einwertige Anionen X abgesättigt, von denen zwei gleiche oder verschiedene auch miteinander verknüpft sein können (Dianionen 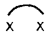 ), beispielsweise einwertig oder zweiwertig negative Reste aus gleichen oder verschiedenen, linearen oder verzweigten, gesättigten oder ungesättigten Kohlenwasserstoffen, Aminen, Phosphinen, Thioalkoholen, Alkoholen oder Phenolen. Einfache Anionen wie CR₃-, NR₂-, PR₂⁻, OR⁻, SR⁻ können durch gesättigte oder ungesättigte Kohlenwasserstoff- oder Silan-Brücken verbunden sein, wobei Dianionen entstehen und die Anzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa -CH₂-, -CH₂-CH₂-, -(CH₂)₃-, CH=CH, -(CH=CH)₂-, -CH=CH-CH₂-, CH₂-CH=CH-CH₂-, -Si(CH₃)₂-, C(CH₃)₂-. Beispiele für X sind: Hydrid, Chlorid, Methyl, Ethyl, Phenyl, Fluorid, Bromid, Iodid, der n-Propylrest, der i-Propylrest. der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, Dimethylamino, Diethylamino, Methylethylamino, Di-t-Butylamino, Diphenylamino, Diphenylphosphino, Dicyclohexylphosphino, Dimethylphosphino, Methyliden, Ethyliden, Propyliden, das Ethylenglykoldianion. Beispiele für Dianinonen sind 1,4-Diphenyl-1,3 -butadiendiyl, 3 -Methyl-1,3 -pentadiendiyl, 1,4-Dibenzyl-1,3-butadiendiyl, 2,4-Hexadiendiyl, 1,3-Pentadiendiyl, 1,4-Ditolyl-1,3-butadiendiyl, 1,4-Bis(trimethylsilyl)-1,3-butadiendiyl, 1,3-Butadiendiyl. Besonders bevorzugt sind 1,4-Diphenyl-1,3-butadiendiyl, 1,3-Pentadiendiyl, 1,4-Dibenzyl-1,3-butadiendiyl, 2,4-Hexadiendiyl, 3-Methyl-1,3-pentadiendiyl, 1,4-Ditolyl-1,3-butadiendiyl und 1,4-Bis(trimethylsilyl)-1,3-butadiendiyl. Weitere Beispiele für Dianionen sind solche mit Heteroatomen, etwa der Struktur 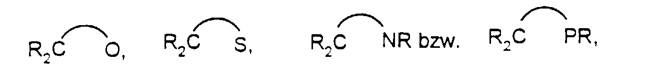 wobei die Brücke die angegebene Bedeutung hat. Besonders bevorzugt sind darüber hinaus zur Ladungskompensation schwach oder nicht koordinierende Anionen der obengenannten Art.

Die Aktivierung durch solche voluminösen Anionen gelingt beispielsweise durch Umsetzung der D/A-π-Komplex-Verbindungen, insbesondere der D/A-Metallocene mit Tris-(pentafluorphenyl)-boran, Triphenylboran, Triphenylaluminium, Trityl-tetrakis-(pentafluorphenyl)-borat oder N,N-Dialkyl-phenyl-ammonium-tetrakis-(pentafluorphenyl)-borat oder die entsprechenden Phosphonium- oder Sulfoniumsalze von Boraten oder (Erd)Alkali-, Thallium- oder Silbersalzen von Boraten, Carboranen, Tosylaten, Triflaten, Perfluorcarboxylaten wie Trifluoracetat oder den korrespondierenden Säuren. Vorzugsweise werden dabei D/A-Metallocene eingesetzt, deren Anionäquivalente X = Alkyl-, Allyl-, Aryl-, Benzylgruppen darstellt. Solche Derivate können auch "in situ" hergestellt werden, indem man D/A-Metallocene mit anderen Anionäquivalenten wie X = F, Cl, Br, OR zuvor mit Aluminiumalkylen, Lithiumorganylen oder Grignard-Verbindungen oder Zink- oder Bleialkylen umsetzt. Die daraus erhältlichen Umsetzungsprodukte können ohne vorherige Isolierung mit obengenannten Boranen oder Boraten aktiviert werden.

Der Index n nimmt in Abhängigkeit von der Ladung von M den Wert Null, Eins, Zwei, Drei oder Vier, bevorzugt Null, Eins oder Zwei an. Die obengenannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden. Im Falle von La³⁺ nimmt demnach der Index n den Wert Eins und im Falle von Zr⁴⁺ den Wert Zwei an; bei Sm²⁺ wird n = Null.

Zur Herstellung der Metallocen-Verbindungen der Formel (I) kann man entweder je eine Verbindung der obigen Formeln (II) und (III) oder je eine Verbindung der obigen Formeln (IV) und (V) oder je eine Verbindung der obigen Formeln (VI) und (VII) oder je eine Verbindung der obigen Formeln (VIII) und (III) oder je eine Verbindung der obigen Formeln (IV) und (IX) oder je eine Verbindung der obigen Formeln (X) und (VII) unter Austritt bzw. Abspaltung von Alkalimetall-X-, Erdalkalimetall-X₂-, Silyl-X-, Germyl-X-, Stannyl-X- oder HX-Verbindungen in einem aprotischen Lösungsmittel bei Temperaturen von -78°C bis +120°C, vorzugsweise von -40°C bis +70°C und in einem Molverhältnis von (II):(III) bzw. (IV):(V) bzw. (VI):(VII) bzw. (VIII):(III) bzw. (IV):(IX) bzw. (X):(VII) von 1:0,5-2, vorzugsweise 1:0,8-1,2, besonders bevorzugt 1:1, miteinander umzusetzen. In den Fällen der Umsetzung von (VIII) mit (III) bzw. (IV) mit (IX) bzw. (X) mit (VII) ist es möglich, auf ein aprotisches Lösungsmittel zu verzichten, wenn (VIII), (IX) oder (X) unter Reaktionsbedingungen flüssig ist. Beispiele für solche austretenden bzw. abgespaltenen Verbindungen sind: TlCl, LiCl, LiBr, LiF, LiI, NaCl, NaBr, KCl, KF, MgCl₂ MgBr₂, CaCl₂, CaF₂, Trimethylchlorsilan, Triethylchlorsilan, Tri-(n-butyl)-chlorsilan, Triphenylchlorsilan, Trimethylchlorgerman, Trimethylchlorstannan, Dimethylamin, Diethylamin, Dibutylamin und weitere Verbindungen, die aus dem obengenannten Substitutionsmuster für den Fachmann erkennbar sind.

Verbindungen der Formel (II) bzw. (IV) stellen somit Carbanionen mit einem Cyclopentadienylgerüst oder einem heterocyclischen Gerüst dar, die zur D/A-Brückenbildung genutzte 1 bis 3 Donorgruppen kovalent gebunden oder als heterocyclische Ringglieder inkorporiert enthalten und als Gegenion zur negativen Ladung des Cyclopentadienylgerüstes ein Kation aufweisen. Verbindungen der Formel (VIII) sind ungeladene cyclische Gerüste mit ebenfalls zur D/A Brückenbildung genutzten 1 bis 3 Donorgruppen, aber mit leicht abspaltbaren Abgangsgruppen E(R¹R²R³), wie Silyl-, Germyl- oder Stannylgruppen oder Wasserstoff, an Stelle der ionischen Gruppen.

Die zweite Komponente zur Ausbildung der erfindungsgemäß einzusetzenden Metallocen-Verbindungen, nämlich die Verbindung der Formel (III) bzw. (V) stellt ebenfalls ein Carbanion mit einem Cyclopentadienylgerüst dar, das gleich dem Cyclopentadienylgerüst der Verbindung (II) bzw. (IV) oder verschieden von ihm ist, jedoch 1 bis 3 Akzeptorgruppen an Stelle der Donorgruppen trägt. In entsprechender Weise sind Verbindungen der Formel (IX) ungeladene Cyclopentadien-Gerüste mit 1 bis 3 Akzeptorgruppen und ebenfalls leicht abspaltbaren Abgangsgruppen F(R⁴R⁵R⁶).

In völlig analoger Weise stellen Verbindungen der Formeln (VI) bzw. (X) Ausgangsstoffe mit vorgebildeter D→A-Bindung dar, die Carbanionen-Gegenkationen-Verbindungen bzw. ungeladene Cyclopentadien-Gerüste mit insgesamt möglichen 1 bis 3 D→A-Bindungen bedeuten und durch Reaktion mit Verbindungen der Formel (VII) die Metallocen-Verbindungen (I) ergeben.

Beide Ausgangsstoffe des Herstellungsverfahrens, nämlich (II) und (III) bzw. (IV) und (V) bzw. (VI) und (VII) bzw. (VIII) und (III) bzw. (IV) und (IX) bzw. (X) und (VII) reagieren beim Zusammengeben spontan unter gleichzeitiger Ausbildung der Donor-Akzeptor-Gruppe -D→A- bzw. der Komplexierung des Metallkations M unter Austritt von M'X bzw. E(R¹R²R³)X bzw. F(R⁴R⁵R⁶)X bzw. HX. Bei der Darstellung der Donor-Akzeptor-Gruppe wurden die Substituenten an D und A der Übersichtlichkeit halber weggelassen.

M' ist ein Kationäquivalent eines (Erd)Alkalimetalls, wie Li, Na, K, ½ Mg, ½ Ca, ½ Sr, ½ Ba, oder Thallium.

In oben angegebener Weise werden die Verbindungen der Formel (XIIIa+b) in analoger Weise hergestellt.

Lösungsmittel für das Herstellungsverfahren sind aprotische, polare oder unpolare Lösungsmittel, wie aliphatische und aromatische Kohlenwasserstoffe oder aliphatische und aromatische Halogenkohlenwasserstoffe. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Pentan, Heptan, Petrolether, Toluol, Benzol, Chlorbenzol, Methylenchlorid, Diethylether, Tetrahydrofuran, Ethylenglykoldimethyl ether.

Die Ausgangsstoffe der Formeln (II), (III), (IV) und (V) können gemäß literaturbekannten Verfahren oder analog zu diesen hergestellt werden. So läßt sich beispielsweise analog zu J. of Organometallic Chem. (1971), 29, 227, das marktgängige Trimethylsilyl-cyclopentadien zunächst mit Butyl-lithium und dann mit Trimethylsilylchlorid zum Bis(trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. (1979), 169, 327), welches schließlich analog zu J. of Organometallic Chem. (1979), 169, 373 mit Titantetrachlorid zum Dichlorboryl-cyclopentadienyl-titantrichlorid umgesetzt werden kann. Diese zuletzt genannte Verbindung stellt bereits einen Prototyp der Verbindungen der Formel (III) dar; die zuletzt genannte Verbindung kann weiterhin selektiv mit Trimethylaluminium umgesetzt werden, wobei die beiden mit dem Boratom verbundenen Chloratome durch Methylgruppen ausgetauscht werden und wobei eine weitere Verbindung der Formel (III) aufgezeigt ist. Analog den Verfahrensbeschreibungen in J. Am. Chem. Soc. (1983) 105, 3882 und Organometallics (1982) 1, 1591 kann das marktgängige Cyclopentadienyl-thallium mit Chlor-diphenylphosphin und weiter mit Butyl-lithium umgesetzt werden, wobei man einen Prototyp von Verbindungen der Formel (II) erhält. Als ein weiteres Beispiel sei die Bildung von Dimethylstannyl-diphenylphosphin-inden durch Umsetzung von Inden zunächst mit Butyl-lithium, wie oben bereits genannt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter von Verbindungen der Formel (IV) gibt. Solche Synthesen und Herstellungsweisen sind dem auf dem Gebiet der metallorganischen und der elementorganischen Chemie tätigen Fachmann geläufig und in zahlreichen Literaturstellen veröffentlicht, von denen oben nur einige exemplarisch angeführt wurden.

Pro Mol π-Komplex-Verbindungen bzw. Metallocen-Verbindungen werden 10¹ bis 10¹² Mol Comonomere umgesetzt. Die π-Komplex-Verbindungen bzw. Metallocen-Verbindungen können zusammen mit Cokatalysatoren eingesetzt werden. Das Mengenverhältnis zwischen Metallocen-Verbindung bzw. π-Komplex-Verbindung und Cokatalysator beträgt 1 bis 100 000 mol Cokatalysator pro mol Metallocen bzw. π-Komplex-Verbindung. Cokatalysatoren sind beispielsweise Aluminoxanverbindungen. Darunter werden solche der Formel 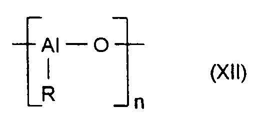 verstanden, in der
- R: für C₁-C₂₀-Alkyl, C₆-C₁₂-Aryl oder Benzyl steht und
- n: eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkylen) in Kombination mit Wasser (in gasförmiger, flüssiger, fester oder gebundener Form, etwa als Kristallwasser) einzusetzen. Das Wasser kann auch als (Rest)Feuchte des Polymerisationsmediums, des Monomers oder eines Trägers wie Silikagel zugeführt werden.

Die aus der eckigen Klammer von Formel (XI) herausragenden Bindungen enthalten als Endgruppen des oligomeren Aluminoxans R-Gruppen oder AlR₂-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgängige Verbindungen. Im speziellen Fall von R = CH₃ wird von Methylaluminoxanen (MAO) gesprochen.

Weitere Cokatalysatoren sind Aluminiumalkyle, Lithiumalkyle oder Mg-organische Verbindungen, wie Grignard-Verbindungen oder teilhydrolysierte Boroganyle. Bevorzugte Cokatalysatoren sind Aluminoxane.

Die Aktivierung mit dem Cokatalysator bzw. die Erzeugung des voluminösen nicht- oder schwach-kooridinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel durchgeführt werden.

Die π-Komplex-Verbindungen bzw. Metallocen-Verbindungen und die Aluminoxane können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, Al₂O₃, MgCl₂, NaCl, Cellulosederivate, Stärke und Polymere. Hierbei kann sowohl erst die π-Komplex-Verbindung bzw. Metallocen-Verbindung als auch erst das Aluminoxan auf den Träger gebracht werden und die jeweils andere Komponente danach zugesetzt werden. Gleichermaßen kann man aber auch die Metallocen-Verbindung in homogener oder heterogener Form mit dem Aluminoxan aktivieren und danach die aktivierte Metallocen-Verbindung auf den Träger bringen.

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt. Die Oberfläche solcher anorganischer Träger, insbesondere von Silica (SiO₂), liegt zwischen 10 und 1000 m²/g, vorzugsweise zwischen 100 und 800 m²/g. Der Teilchendurchmesser liegt zwischen 0,1 und 500 Mikrometer (µ), vorzugsweise zwischen 10 und 200 µ.

Cyclische Monomere sind mono- oder polycyclisch und fallen unter eine der beiden Formeln 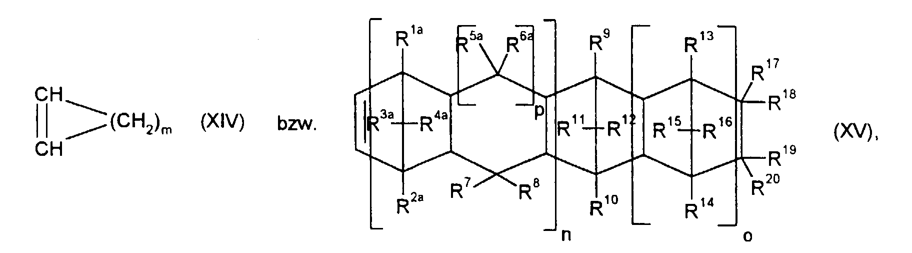 in denen die Indices
- m: eine Zahl von 2 bis 10, bevorzugt 3 bis 6,
- n: die Zahl 0 oder 1,
- o: die Zahl 0, 1, 2 oder 3 und
- p: die Zahl 0 oder 1 bedeutet,
in Formel (XIV) zwei benachbarte CH₂-Gruppen durch die Gruppe -CH=CH- ersetzt sein kann und in Formel (XV) die Reste R^{1a} bis R^{6a} und R⁷ bis R²⁰ unabhängig voneinander Wasserstoff, Fluor, Chlor, Brom, geradkettiges oder verzweigtes C₁-C₂₀-Alkyl, C₃-C₈-Cycloalkyl oder C₆-C₁₆-Aryl darstellen, wobei zusätzlich das Restepaar R¹⁸/R¹⁹ eine Doppelbindung oder eine der Gruppen -CHR²¹-CHR²²-CHR²³-, -CHR²¹ -CHR²²-CHR²³-CHR²⁴- oder -CHR²¹-CHR²²-CHR²³-CHR²⁴-CHR²⁵-, in denen R²¹ bis R²⁵ Wasserstoff oder C₁-C₄-Alkyl ist, bedeuten kann und das Restepaar R¹⁷/R¹⁸ die doppelt gebundene Gruppe =C(R²⁶,R²⁷), in der R²⁶ und R²⁷ C₁-C₄-Alkyl sind und R²⁷ auch Wasserstoff sein kann, bedeuten kann.

Solche cyclische Monomere haben eine oder mehrere, bevorzugt eine oder zwei Doppelbindungen und sind bekannt und beispielsweise in den Verfahren von EP-A 610 852, EP-A 690 078 und US 5 567 777 eingesetzt.

Bevorzugte cyclische Monomere der Formel (XV) sind solche der Formeln 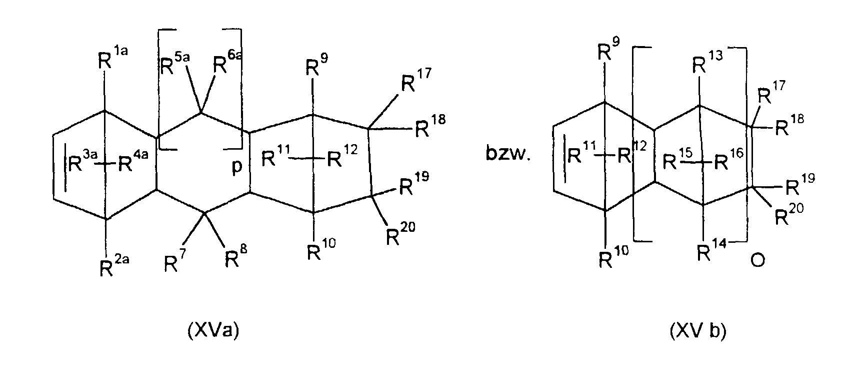 Eine beispielhafte, nicht erschöpfende Aufzählung solcher cyclischer Comonomerer umfaßt Cyclobuten, Cyclopenten, Cyclopentadien, Cyclohexen, Cyclohepten, Cycloocten, Cyclodecen, Cyclododecen, Bicyclo-2-heptene, Tricyclo-3-decene, Tricyclo-3-undecene, Tetracyclo-3-dodecene, Pentacyclo-4-pentadecene, Pentacyclopentadecadiene, Pentacyclo-3-pentadecene, Pentacyclo-4-hexadecene, Pentacyclo-3-hexadecene, Hexacyclo-4-heptadecene, Heptacyclo-5-eicosene, Heptacyclo-4-eicosene, Heptacyclo-5-heneicosene, Octacyclo-5-docosene, Nonacyclo-5-pentacosene, Nonacyclo-6-hexacosene, Cyclopentadien/Acenaphthylen-Addukte, 1,4-Methano-1.4.4a.9a-tetrahydrofluorene und 1,4-Methano-1.4.4a.5.10.10a-hexahydroanthracene, wie z.B. Bicyclo[2,2,1]-hept-2-en (Norbornen), Norbornadien, 5-Methyl-norbornen, 6-Methyl-norbornen, 5,6-Dimethyl-norbornen, 1-Methyl-norbornen, 5-Isobutyl-norbornen, 7-Methyl-norbornen, Tricyclo[4,3,0,1^{2,5}]-3-decen (5,6-Trimethylen-norbornen), Tricyclo[4,4,0,1^{2,5}]-3-undecen(5,6-Tetramethylen-norbornen), 10-Methyl-tricyclo[4,4,0,1^{2,5}]-3-undecen, 6-Ethylbicyclo[2.2.1]hept-2-en, 6-n-Butylbicyclo[2.2.1]hept-2-en, 6-Isobutylbicyclo-[2.2.1]hept-2-en, 2-Methyltricyclo[4.3.0.1^{2,5}]-3-decen, 5-Methyltricyclo[4.3.0.1^{2,5}]-3-decen, Tricyclo[4.3.0.1^{2,5}]-3-undecen, Tricyclo[4,3,0,1^{2,5}]-3,7-decadien (Dicyclopentadien), Tricyclo[4,3,0,1^{2,5}]-3-decen, Tetracyclo[4,4,0,1^{2,5}, 1^{7,10}]-3-dodecen, 8-Methyl-tetracyclo[4,4,0,1^{2,5},1^{7,10}]-3-dodecen, 8-Cyclohexyl-tetracyclo-[4,4,0,1^{2,5},1^{7,10}]-3-dodecen, 8-Stearyl-tetracyclo[4,4,0,1^{2,5},1^{7,10}]-3-dodecen, das 5,10-Dimethyl-, 2,10-Dimethyl-, 8,9-Dimethyl-, 11,12-Dimethyl-, 2,7,9-Trimethyl-, 9-Isobutyl-, 11,12-Dimethyl-, 8-Ethyliden-9-methyl, 8-Chlor-, 8-Brom- oder 8-Fluor-derivat des Tetracyclo[4,4,0,1^{2,5},1^{7,10}]-3-dodecen, 8-Ethyltetracyclo[4.4.0.1^{2,5},1^{7,10}]-3-dodecen, 8-Propyltetracyclo[4.4.0.1^{2,5},1^{7,10}]-3-dodecen, 8-Butyltetracyclo[4.4.0.1^{2,5}.1^{7,10}]-3-dodecen, 8-Isobutyltetracyclo[4.4.0.1^{2,5}.1^{7,10}]-3-dodecen, 8-Hexyltetracyclo[4.4.0.1^{2,5}.1 ^{7,10}]-3-dodecen, 8-Methyl-9-ethyltetracyclo[4.4.0.1^{2,5}.1^{7,10}]-3-dodecen. 9-Ethyl-2,7-dimethyltetracyclo[4.4.0.1^{2,5}.1^{7,10}]-3-dodecen, 9-Isobutyl-2,7-dimethyltetracyclo[4.4.0.1 ^{2,5}.1^{7.10}]-3-dodecen, 9,11,12-Trimethyltetracyclo[4.4.0.1^{2,5}.1^{7,10}]-3-dodecen, 9-Ethyl-11,12-dimethyltetracyclo[4.4.0.1^{2,5}.1^{7,10}]-3-dodecen, 9-Isobutyl-11,12-dimethyl-tetracyclo[4.4.0.1^{2,5}.1^{7,10}]-3-dodecen, 5,8,9,10-Tetramethyltetracyclo[4.4.0.1^{2,5}1^{7,10}]-3-dodecen, 8-Ethylidentetracyclo[4.4.0.1^{2,5}.1^{7,10}]-3-dodecen, 8-Ethyliden-9-methyltetracyclo[4.4.0.1^{2,5}.1^{7,10}]-3-dodecen, 8-Ethyliden-9-ethyltetracyclo[4.4.0.1^{2,5}.1^{7,10}]-3-dodecen, 8-Ethyliden-9-isopropyltetracyclo[4.4.0.1^{2,5}.1^{7,10}]-3-dodecen, 8-Ethyliden-8-butyltetracyclo[4.4.0.1^{2,5}.1^{7,10}]-3-dodecen, 8-n-Propylidentetracyclo[4.4.0.1^{2,5}.1⁷'¹⁰]-3-dodecen, 8-n-Propyliden-9-methyltetracyclo[4.4.0.1^{2,5}.1^{7,10}]-3-dodecen, 8-n-Propyliden-9-ethyltetracyclo[4.4.0.1^{2,5}.1^{7,10}]-3-dodecen, 8-n-Propyliden-9-isopropyltetracyclo[4.4.0.1^{2,5}.1^{7,10}]-3-dodecen, 8-n-Propyliden-9-butyltetracyclo[4.4.0.1^{2,5}.1^{7,10}]-3-dodecen, 8-Isopropylidentetracyclo[4.4.0.1^{2,5}.1^{7,10}]-3-dodecen, 8-Isopropyliden-9-methyltetracyclo-[4.4.0.1^{2,5}.1^{7,10}]-3-dodecen, 8-Isopropyliden-9-ethyltetracyclo[4.4.0.1^{2,5}.1^{7,10}]-3-dodecen, 8-Isopropyliden-9-isopropyltetracyclo[4.4.0.1^{2,5}.1^{7,10}]-3-dodecen, 8-Isopropyliden-9-butyltetracyclo[4.4.0.1^{2,5}.1^{7,10}]-3-dodecen, 8,9-Dichlortetracyclo[4.4.0.1^{2,5}.1^{7,10}]-3-dodecen, Pentacyclo[6,5,1,1^{3,6},0^{2,7},0^{9,13}]-4-pentadecen, Pentacyclo[7,4,0,1^{2,5},1^{9,12},0^{8,13}]-3-pentadecen, Pentacyclo[8,4,0,1^{2,5},1^{9,12},0^{8,13} ]-3-hexadecen, 1,3-Dimethylpentacyclo[6.5.1.1^{3,6}.0^{2,7}.0^{9,13}]-4-pentadece, 1,6-Dimethyl[6.5.1.1^{3,6}.0^{2,7}.0^{9,13}]-4-pentadecen, 14,15-Dimethyl[6.5.1.1^{3,6}.0^{2,7}.0^{9,13}]-4-pentadecen, Pentacyclo[7.4.0.1^{2,5}.1^{9,12}.0^{8,13}]-3-pentadecen, Methyl-substituierte Pentacyclo[7.4.0.1^{2,5}.1^{9,12}.0^{8,13}]-3-pentadecen, Pentacyclo[6.5.1.1^{3,6}.0^{2,7}.0^{9,13}]-4,10-pentadecadien, 11-Methylpentacyclo[8.4.0.1^{2,5}.1^{9,12}.0^{8,13}]-3-hexadecen, 11-Ethyl[8.4.0.1^{2,5}.1^{9,12}.0^{8,13}]-3-hexadecen, 10,11-Dimethyl[8.4.0.1^{2,5}.1^{9,12}.0 ^{8,13}]-3-hexadecen, Pentacyclo[6.6.1.1^{3,6}.0^{2,7}.0^{9,14}]-4-hexadecen, 1,3-Dimethylpentacyclo[6.6.1.1^{3,6}.0^{2,7}.0^{9,14}]-4-hexadecen, 15,16-Dimethylpentacyclo[6.6.1.1^{3,6}.0^{2,7}.0^{9,14}]-4-hexadecen, Hexacyclo[6,6,1,1^{3,6},1^{10,13},0^{2,7},0^{9,14}]-heptadecen, Heptacyclo-[8,7,0,1^{2,9},1^{4,7},1^{11,17},0^{3,8},0^{12,16}]-5-eicosen, Heptacyclo[8,8,0,1^{4,7},1^{11,18},1^{13,16},0^{3,8}, 0^{12,17}]-5-heneicosen, 12-Methylhexacyclo[6.6.1.1^{3,6}, 1^{10,13}.0^{2,7}.0^{9,14}]-4-heptadecen, 12-Ethylhexacyclo[6.6.1.1^{3,6}.1^{10,13}.0^{2,7}.0^{9,14}]-4-heptadecen, 12-Isobutylhexacyclo[6.6.1.1^{3,6},1 ^{10,13}.0^{2,7}.0^{9,14}]-4-heptadecen, 1,6,10-Trimethylhexacyclo[6.6.1.1^{3,6}.1^{10,13}.0^{2,7}.0^{9,14}]-4-heptadecen, Heptacyclo[8.7.0.1^{3,6}.1^{10,17}.1^{12,15}.0^{2,7}.0^{11,16}]-4-eicosen und seine dimethylsubstituierten Derivate, Heptacyclo[8.8.0.1^{4,7}.1^{11,18}.1^{13,16}.0^{3,8}.0^{12,17}]-5-heneicosen und seine trimethylsubstituierten Derivate, 15-Methylheptacyclo[8.8.0.1^{4,7}.1^{11,18}.1^{13,16}.0^{3,8}.0^{12,17}]-5-heneicosen, 5-Phenyl-bicyclo[2.2.1]hept-2-en, 5-Methyl-5-phenyl-bicyclo[2.2.1]hept-2-en, 5-Benzyl-bicyclo[2.2.1]hept-2-en, 5-Tolyl-bicyclo[2.2.1]hept-2-en, 2-(Ethylphenyl)-bicyclo-[2.2.1]hept-2-en, 5-(Isopropylphenyl)-bicyclo[2.2.1]hept-2-en, 5-Biphenyl-bicyclo-[2.2.1]hept-2-en, 5-(β-Naphthyl)-bicyclo[2.2.1]hept-2-en, 5-(α-Naphthyl )-bicyclo-[2.2.1]hept-2-en, 5-(Anthracenyl)-bicyclo[2.2.1]hept-2-en, 5,6-Diphenyl-bicyclo-[2.2.1]hept-2-en, 1,4-Methano-1.4.4a.9a-tetrahydrofluoren, 1,4-Methano-1.4.4a.5.10. 10a-hexahydroanthracen, 8-Phenyltetracyclo[4.4.0.1^{2,5}.1^{7,10}]-3-dodecen, 8-Methyl-8-phenyl-tetracyclo[4.4.0.1^{2,5}.1^{7,10}]-3-dodecen, 8-Benzyl-tetracyclo[4.4.0.1^{2,5}.1^{7,10}]-3-dodecen, 8-Tolyl-tetracyclo[4.4.0.1^{2,5}.1^{7,10}]-3-dodecen, 8-(Ethylphenyl)-tetracyclo[4.4.0.1^{2,5}.1^{7,10}]-3-dodecen, 8-(Isopropylphenyl)-tetracyclo[4.4.0.1^{2,5}.1^{7,10}]-3-dodecen, 8,9-Diphenyl-tetracyclo[4.4.0.1^{2,5}.1^{7,10}]-3-dodecen, 8-(Biphenyl)-tetracyclo[4.4.0.1^{2,5}.1^{7,10}]-3-dodecen, 8-(β-Naphthyl)-tetracyclo[4.4.0.1^{2,5}.1^{7,10}]-3-dodecen, 8-(α-Naphthyl)-tetracyclo[4.4.0.1^{2,5}.1 ^{7,10}]-3-dodecen und 8-(Anthracenyl)-tetracyclo[4.4.0.1^{2,5}.1^{7,10}]-3-dodecen.

Bevorzugte Cycloolefine sind auch solche, die durch Halogen, -CF₃, -N(C₁-C₃₀-Alkyl)₂-CN, C₁-C₁₂-Alkoxy oder C₁-C₂₀-Alkylen-COOC₁-C₂₀-alkyl, vorzugsweise ein- bis dreimal pro Molekül substituiert sind.

Die Cycloolefine können auch in Gegenwart von acyclischen Mono- oder Diolefinen, Alkinen und Kohlenmonoxid polymerisiert werden. Geeignete acyclische Olefine umfassen C₂-C₄₀-α-Olefine und C₄-C₂₄-Diolefine, wie z.B. Ethylen, Propylen, 1-Buten, 1-Penten, 1-Hexen, 3-Methyl-1-buten, 3-Methyl-1-penten, 4-Methyl-1-penten, 4-Methyl-1-hexen, 4,4-Dimethyl-1-hexen, 4,4-Dimethyl-1-penten, 4-Ethyl-1-hexen, 3-Ethyl-1-hexen, 1-Octen, 1-Decen, 1-Dodecen, 1-Tetradecen, 1-Hexadecen, 1-Octadecen, 1-Eicosen und Mischungen dieser α-Olefine sowie 1,3-Butadien, Isopren, 1,3-Pentadien, 1,4-Hexadien, 1,5-Hexadien, 1,6-Heptadien, 1,6- und 1,7-Octadien, 1,8-Nonadien, 1,9-Decadien, 1,11-Dodecadien, 1,19-Eicodien und Mischungen dieser Diolefine. Auch Mischungen von α.Olefinen und Diolefinen sind geeignet.

Solche Olefine und Diolefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Chloropren, Styrol, Methylstyrol, Chlorstyrol, Fluorstyrol, Inden, 4-Vinyl-biphenyl, Vinyl-fluoren, Vinylanthracen, Methylmethacrylat, Ethylacrylat, Vinylsilan, Trimethylallylsilan. Vinylchlorid, Vinylidenchlorid, Tetrafluorethylen, Isobutylen, Vinylcarbazol, Vinylpyrrolidon. Acrylnitril, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen, Buten, Hexen, Octen, 1,5-Hexadien, 1,6-Octadien, Methylmethacrylat, ε-Caprolacton, δ-Valerolacton und Acetylen.

Bevorzugt sind Ethylen und Propylen.

Das cyclische Monomer der Formeln (XIV) bzw. (XV) stellt einen molaren Anteil von 1 bis 100 % der Gesamtmolzahl aller eingesetzten Comonomere. Das α-Olefin stellt einen molaren Anteil von 99 bis 0 % der Gesamtmolzahl aller eingesetzter Comonomerer. Die bevorzugten Mengen von Cycloolefin zu α-Olefin betragen 20:80 mol-% bis 80:20 mol-%. Für den Fall, daß Cycloolefine sowohl der Formel (XIV) als auch der Formel (XV) eingesetzt werden, beträgt deren molares Verhältnis 10:90 mol-% bis 90:10 mol-%.

Das erfindungsgemäße Verfahren wird bei den oben angegebenen Temperaturen und Drücken in der Gas-, Masse-, Flüssig- oder in der Slurry-Phase durchgeführt, je nachdem, ob ein löslicher oder ein unlöslicher Katalysator der oben beschriebenen Art eingesetzt wird. Die Flüssigphase bzw. die Slurry-Phase kann aus den Comonomeren allein, d.h. ohne Verwendung eines zusätzlichen Lösungsmittels, gebildet werden. Für den Fall, daß ein Lösungsmittel mitverwendet wird, kommen hierfür inerte Lösungsmittel, beispielsweise aliphatische oder cycloaliphatische Kohlenwasserstoffe, Benzin- bzw. Dieselölfraktionen (gegebenenfalls nach einer Hydrierung), Toluol, Chlorbenzol, o-Dichlorbenzol oder Chlornaphthalin in Frage. Bei Lösungsmittel mit niedrigem Siedepunkt kann durch Anlegen eines ausreichenden Reaktionsdruckes für die Einhaltung der flüssigen Phase gesorgt werden; diese Zusammenhänge sind dem Fachmann bekannt. Die Polymere können durch Nichtlösemittel, wie Methanol, ausgefällt oder umgefällt und dann getrocknet werden.

Solche (Co)Polymerisationen sind bekannt und dem Fachmann geläufig. Es ist ein Vorteil der erfindungsgemäßen π-Komplex-Verbindungen bzw. Metallocen-Verbindungen, daß sie durch Auswahl der Substituenten sowohl als lösliche, gegebenenfalls auf Trägern aufgebrachte, als auch als unlösliche π-Komplex-Verbindungen bzw. Metallocen-Verbindungen herstellbar sind. Lösliche π-Komplex-Verbindungen bzw. Metallocen-Verbindungen wird man z.B. für das Lösungsverfahren einsetzen; heterogene Metallocen-Verbindungen wird man z.B. in der Gasphase einsetzen. Erfindungsgemäß kann diskontinuierlich oder bevorzugt kontinuierlich unter Einsatz eines oder mehrerer Reaktoren oder Reaktionszonen gearbeitet werden. Für den Fall mehrerer Reaktoren oder Reaktionszonen können unterschiedliche Polymerisationsbedingungen eingestellt werden.

Die erfindungsgemäß einzusetzenden π-Komplex-Verbindungen, besonders die Metallocen-Verbindungen, ermöglichen durch die Donor-Akzeptor-Brücke eine definierte Öffnung der beiden Cyclopentadienylgerüste in der Art eines Schnabels, wobei neben einer hohen Aktivität eine kontrollierte Selektivität, eine kontrollierte Molekulargewichtsverteilung und ein einheitlicher Einbau von Comonomeren gewährleistet sind. Infolge einer definierten schnabelartigen Öffnung ist auch Platz für voluminöse Monomere. Die hohe Einheitlichkeit in der Molekulargewichtsverteilung wird weiterhin aus dem einheitlichen und definierten Ort der durch Einschub (Insertion) erfolgenden Polymerisation wahlweise ermöglicht (Single Site Catalyst) und kann durch die Wahl der Polymerisationstemperatur eingestellt werden..

Die Molekulargewichtsverteilung kann gezielt verändert (verbreitert) werden indem man gleichzeitig mehrere D/A-Katalysatoren einsetzt, um ein bestimmtes Material-Eigenschaftsprofil einzustellen. Dementsprechend ist es auch möglich, einen oder mehrere D/A-Katalysatoren in Kombination mit anderen Metallocenen die keine D/A-Brücke aufweisen einzusetzen.

Die D/A-Struktur kann eine Extra-Stabilisierung der Katalysatoren bis hin zu hohen Temperaturen bewirken, so daß die Katalysatoren auch im Hochtemperaturbereich eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften.

Eine weitere wertvolle Eigenschaft der erfindungsgemäßen D/A-π-Komplex-Verbindungen, beispielsweise D/A-Metallocen-Verbindungen, besteht in der Möglichkeit zur Selbstaktivierung und damit einem Verzicht auf teure Cokatalysatoren, insbesondere im Falle von dianionischen 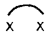 -Derivaten.

Hierbei bindet das Akzeptoratom A in der geöffneten Form der D/A-π-Komplex-Verbindungen, beispielsweise D/A-Metallocen-Verbindung, einen X-Liganden, beispielsweise eine Seite eines Dianions unter Ausbildung einer zwitterionischen Metallocen-Struktur und erzeugt damit beim Übergangsmetall eine positive Ladung, während das Akzeptoratom A eine negative Ladung annimmt. Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht:

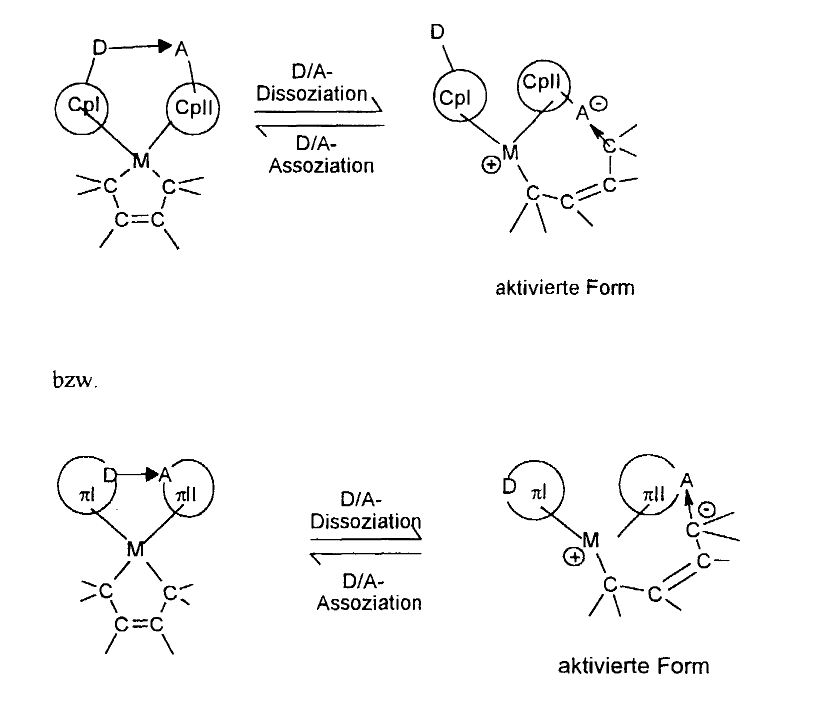

Die Bindungsstelle zwischen dem Übergangsmetall M und H oder substituiertem oder nicht substituierten C, im Formelbeispiel dem noch gebundenen substituierten C des gezeigten Butadiendiyl-Dianions, ist sodann der Ort für die Olefin-Insertion zur Polymerisation.

### Beispiele

Alle Reaktionen wurden unter streng anaeroben Bedingungen und unter Verwendung von Schlenk-Techniken bzw. der Hochvakuumtechnik durchgeführt. Die verwendeten Lösungsmittel waren trocken und mit Argon gesättigt. Chemische Verschiebungen sind in ppm angegeben, relativ zum jeweiligen Standard: ¹H(Tetramethylsilan), ¹³C(Tetramethylsilan), ³¹P(85%ige H₃PO₄), ¹¹B(Bortrifluorid-Etherat-18,1 ppm). Negative Vorzeichen bedeuten eine Verschiebung zu höherem Feld.

### Beispiel 1 (Bis-(trimethylsilyl)-cyclopentadien, Verbindung 1)

14,7 g (0,106 mol) Trimethylsilyl-cyclopentadien (bezogen von Fa. Fluka) und 150 ml Tetrahydrofuran (THF) wurden in einen Reaktionskolben gegeben und auf 0°C abgekühlt. Hierzu wurden 47,4 ml einer Lösung von Butyl-lithium in n-Hexan (2,3 molar; Gesamtmenge 0,109 mol) tropfenweise während 20 Minuten zugefügt. Nach vollständiger Zugabe wurde die gelbe Lösung für eine weitere Stunde gerührt; danach wurde das Kältebad entfernt. Bei Raumtemperatur wurde die Lösung für eine weitere Stunde gerührt und danach auf -20°C abgekühlt. Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und für eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4 mbar 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Am. Chem. Soc, 102, (1980), 4429; J. Gen. Chem. USSR, Eng. Transl. 43 (1973), 1970; J. Chem. Soc., Dalton Trans. 1980, 1156)
¹H-NMR (400 MHz, C₆D₆): δ = 6,74 (m,2H), 6,43 (m,2H), -0,04 (s,18H).

### Beispiel 2 (Trimethylsilyl-cyclopentadienyl-dichlorboran, Verbindung 2)

In einen Rundkolben, der mit einem Trockeneis-Kühlbad ausgerüstet war, wurden 16 g (0,076 mol) der Verbindung 1 gegeben. 8,9 g (0,076 mol) BCl₃ wurden bei -78°C in ein Schlenk-Rohr kondensiert und danach tropfenweise während einer Zeit von 5 Minuten in den Rundkolben gegeben. Die Reaktionsmischung wurde langsam während 1 Stunde auf Zimmertemperatur erwärmt und dann für weitere 2 Stunden auf 55 bis 60°C gehalten. Alle flüchtigen Verbindungen wurden im Vakuum (3 mm Hg = 4 mbar) entfernt. Die anschließende Destillation bei 39°C und 0,012 mbar ergab 14,1 g der Verbindung 2 (85 % der theoretischen Ausbeute). Das ¹H-NMR stimmt mit den Literaturangaben überein und zeigte, daß eine Reihe von Isomeren hergestellt worden waren (vgl. J. Organometallic Chem. 169 (1979), 327). ¹¹B-NMR (64,2 MHz, C₆D₆): δ = +31,5.

### Beispiel 3 (Tributylstannyl-dimethylphosphino-inden, Verbindung 3)

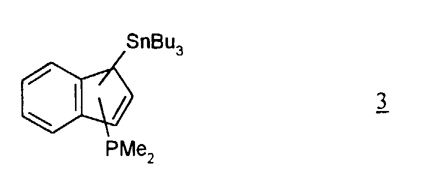

In einen Rundkolben, der 5,5 g (0,047 mol) Inden enthielt, wurden 150 ml Ether gegeben; es wurde auf -20°C abgekühlt. Zu dieser Lösung wurden 20,8 ml einer 2,3 molaren Lösung von Butyl-lithium in Hexan (0,048 mol) innerhalb 5 min gegeben, wobei eine gelbe Lösung entstand. Nach Entfernung des Kältebades wurde die Lösung auf Raumtemperatur erwärmt und 1 h nachgerührt. Nach Abkühlung des Reaktionsgemisches auf - 30°C wurden 4,6 g Chlordimethylphosphin (0,048 mol) in 30 ml Ether innerhalb 20 min zugegeben, wobei ein Niederschlag entstand. Nach 2-stündigem Rühren bei - 20°C wurden 20,8 ml einer 2,3 molaren Lösung von Butyl-lithium in Hexan (0,048 mol) zugetropft. Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 15,6g Chlortributylzinn (0,048 mol) zugetropft. Die entstehende Aufschlämmung wurde auf Raumtemperatur erwärmt und 1,5 h gerührt. Der Ether wurde i. Vak. entfernt und das Rohprodukt erneut in Hexan aufgelöst, abfiltriert und das Filtrat i Vak. getrocknet, wobei 17,4 g der Verbindung 3 (Ausbeute: 78 %) als schweres gelbes Öl übrigblieben. ¹H NMR (400 MHz, CD₂Cl₂) δ 7,67 (d, J = 7,5 Hz, 1 H), 7,47 (d, J = 7,4 Hz, 1 H), 7,18 (m, 2 H), 6,83 (m, 1 H), 4,28 (s mit Sn-Satelliten, 1 H), 1,43 - 0,78 (m, 33 H). ³¹P NMR (161,9 MHz, CD₂Cl₂) δ - 61,6 ppm.

### Beispiel 4 (Dimethylphosphino-indenyl-zirconiumtrichlorid, Verbindung 4)

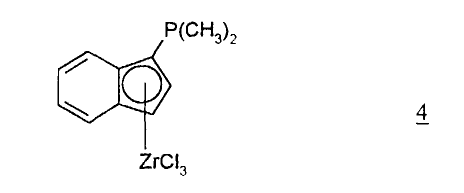

Zu einer Aufschlämmung von 8,5 g (0,036 mol) 99,9 %igem ZrCl₄ in 200 ml Toluol wurde eine Lösung von 17,0 g der Verbindung 3 (0,037 mol) in 50 ml Toluol bei-78°C gegeben. Nach vollständiger Zugabe wurde das Reaktionsgemisch 0,5 h bei - 30°C und danach 4 h bei 0°C gerührt. Der entstehende gelbe Niederschlag wurde abfiltriert und mit Toluol und Hexan gewaschen. Die Feststoffe wurden in Vak. getrocknet, wobei 8,3 g der Verbindung 4 (Ausbeute: 61 %) als freifließendes gelbes Pulver übrigblieb. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 7,2 g (Ausbeute: 53 %) des Produktes übrigblieben. Wegen der Unlöslichkeit dieser Verbindung wurde kein ¹H NMR erhalten.

### Beispiel 5 (Dimethylphosphino-dichlorboranyl-verbrücktes Indenyl-cyclopentadienylzirconiumdichlorid, Verbindung 5)

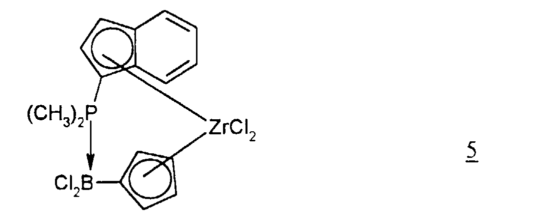

In ein Schlenk-Rohr wurden 30 ml Toluol und 0,55 g der Verbindung 4 (0,0015 mol) gegeben. Zu dieser Aufschlämmung wurden 0,31 g (0,0014 mol) der Verbindung 2 innerhalb 5 min gegeben. Die gelbe Aufschlämmung wurde 6,5 h bei Raumtemperatur gerührt, wobei eine leicht trübe Lösung verblieb. Der Niederschlag wurde durch Filtration entfernt, wobei eine hellgelbe Toluollösung übrigblieb. Nach Entfernung des Toluols i. Vak. verblieb das Produkt als weißlicher Feststoff. Nachdem das Produkt mit Hexan gewaschen und i. Vak. getrocknet wurde, blieb die Verbindung 5 als blaßweißer Feststoff (0,54 g; Ausbeute: 76%) übrig. ¹H NMR (400 MHz, CD₂Cl₂) δ 7,84 (pseudo dd, J = 7,4 Hz 1,0 Hz, 1 H), 7,60 (m, 2 H), 7,51 (m, 1 H), 7,38 (m, 1 H), 6,93 (m, 1 H), 6,71 (m, 1 H), 6,66 (m, 1 H), 6,49 (m, 1 H), 6,30 (br s, 1 H), 2,11 (d J_{H-P} = 11,9 Hz, 3 H), 1,94 (d, J_{H-P} = 11,9 Hz, 3 H). ³¹P NMR (161, 9 MHz, CD₂Cl₂)- 5,9 (br, m); ¹¹B-NMR (80 MHz, CD₂Cl₂) δ - 14,6 (br d, J_{B-P} = 126 Hz).

### Beispiel 6 (Ethen-Norbornen-Copolymerisation)

In einem im Vakuum ausgeheizten V4A-Stahlautoklaven wurden 54 ml trockenes Sauerstoff-freies Toluol und 47 g (0,5 mol) über Natrium im Argonstrom destilliertes Norbornen vorgelegt und 6,6 ml einer 10%igen MAO-Toluol-Lösung (10 mmol) injiziert. Der mit Magnetkern gerührte Autoklav wurde unter 6 bar Ethen auf 70°C erwärmt und nach ca. 15 Minuten die Copolymerisation durch Katalysatorzugabe unter Druck mittels einer Druckschleuse gestartet. Als Katalysator wurden 1 x 10⁻⁶ Mol [(ind)Me₂PBCl₂(Cp)ZrCl₂] (Verbindung 5) in 0,52 ml Toluol und 1 x 10⁻⁴ Mol MAO in 6,6 ml 10 %iger MAO/Toluol-Lösung, nach 15 minütiger Präformation bei Raumtemperatur, eingesetzt. Nach 5-stündiger Copolymerisation bei 70°C unter 6 bar Ethen wurde auf RT abgekühlt, der Autoklav entspannt und die klare, viskose Polymerlösung langsam in 2 Liter Aceton eingerührt. Das gefällte weiße Polymerisat wurde abfiltriert, mit Aceton gewaschen und über Nacht in 2 Liter Ethanol und 200 ml konzentrierter wäßriger Salzsäure ausgerührt, mittels einer Nutsche abgesaugt und mit Ethanol nachgewaschen. Anschließend wurde bei 120°C bis zur Gewichtskonstanz getrocknet.
Polymerausbeute: 16,5 g
Katalysator-Aktivität: 16,5 Tonnen Copolymer pro Mol Katalysator

Grenzviskosität in ortho-Dichlorbenzol bei 140°C [η] = 0,70 dl/g
Copolymer-Zusammensetzung: 50 Mol % Norbornen, 50 Mol % Ethen aus ¹³C-NMR in o-Dichlorbenzol

Die DSC-Messung (2. Aufheizung) belegt ein amorphes Copolymer ohne Schmelzpeaks mit einer Glasübergangstemperatur Tg = 152°C.

## Patentansprüche

1. Verfahren zur Herstellung von Cycloolefin-(Co)Polymeren zur Anwendung für optische Datenspeicher durch (Co)Polymerisation von Monomeren aus der Gruppe der cyclischen Olefine, der α-Olefine mit 2 oder mehr C-Atomen und gegebenenfalls konjugierten oder nicht konjugierten Diolefinen in der Gas-, Masse-, Lösungs- oder Slurryphase bei -78 bis + 200°C und 0,5 bis 70 bar in Gegenwart von metallorganischen Katalysatoren, die durch Cokatalysatoren aktiviert werden können, dadurch gekennzeichnet, daß als metallorganische Katalysatoren Metallocen-Verbindungen der Formel 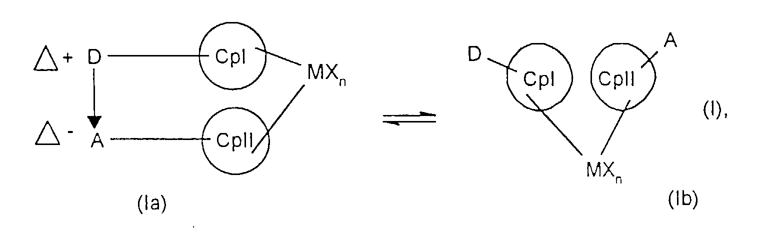 in der
CpI und CpII zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem C₁-C₂₀-Alkyl, das 1fache bis vollständig durch Halogen, 1-3fach durch Phenyl, sowie 1-3fach durch Vinyl substituiert sein kann, C₆-C₁₂-Aryl, Halogenaryl mit 6 bis 12 C-Atomen, Organometall-Substituenten, Silyl, wie Trimethylsilyl, Ferrocenyl sowie 1- oder 2fach durch D und A substituiert sein können,
D ein Donoratom bedeutet, das zusätzlich Substituenten tragen kann und das in seinem jeweiligen Bindungszustand mindestens über ein freies Elektronenpaar verfügt,
A ein Akzeptoratom bedeutet, das zusätzlich Substituenten tragen kann und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen,
M für ein Übergangsmetall der III., IV., V. oder VI. Nebengruppe des Periodensystems der Elemente (Mendelejew) einschließlich der Lanthaniden und Actiniden steht,
X ein Anionäquivalent bedeutet und
n in Abhängigkeit von der Ladung von M die Zahl Null, Eins, Zwei, Drei oder Vier bedeutet,
oder
π-Komplex-Verbindungen und insbesondere Metallocen-Verbindungen der Formel 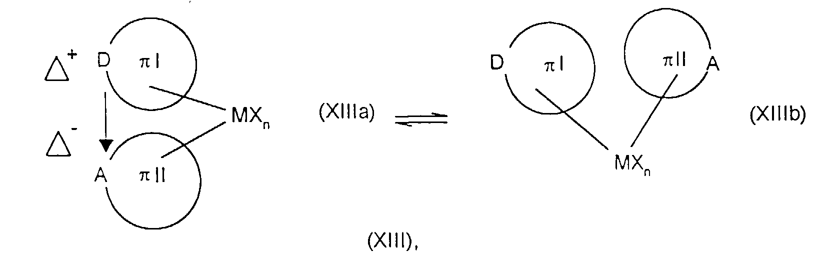 in der
πI und πII voneinander verschiedene geladene oder elektrisch neutrale π-Systeme ausgewählt aus der Gruppe substituiertes und nicht-substituiertes Ethylen, Allyl, Pentadienyl, Benzyl, Butadien, Benzol, das Cyclopentadienylanion und die sich durch Ersatz mindestens eines C-Atoms durch ein Heteroatom ergebende Spezies darstellen, die ein- oder zweifach mit ungesättigten oder gesättigten Fünf- oder Sechsringen kondensiert sein können,
D ein Donoratom bedeutet, das Substituent von πI oder Teil des π-Systems von πI ist und das in seinem jeweiligen Bindungszustand mindestens über ein freies Elektronenpaar verfügt,
A ein Akzeptoratom bedeutet, das Substituent von πII oder Teil des π-Systems von πII ist und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem C₁-C₂₀-Alkyl, das 1-fach bis vollständig durch Halogen, 1- bis 3-fach durch Phenyl sowie 1- bis 3-fach durch Vinyl substituiert sein kann, C₆-C₁₂-Aryl, Halogenaryl mit 6 bis 12 C-Atomen, Organometall-Substituenten, Silyl, wie Trimethylsilyl, Ferrocenyl sowie ein- oder zweifach durch D und A substituiert sein können, sodaß die reversible koordinative D→A-Bindung (i) zwischen D und A, die beide Teile des jeweiligen π-Systems oder des ankondensierten Ringsystems sind, oder (ii) von denen D oder A Teil des π-Systems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des π-Systems oder des ankondensierten Ringsystems ist (sind), ausgebildet wird,
M und X die obige Bedeutung haben und
n in Abhängigkeit von den Ladungen von M sowie denen von πI und πII die Zahl Null, Eins, Zwei, Drei oder Vier bedeutet,
eingesetzt werden.

2. Verfahren nach Anspruch 1, dadurch gekennzeichnet, daß die Metallocen-Verbindungen bzw. die π-Komplex-Verbindungen als Katalysatoren in einer Menge von 10¹ bis 10¹² mol Monomere pro mol Metallocen bzw. π-Komplex-Verbindung eingesetzt werden.

3. Verfahren nach Ansprüchen 1 und 2, dadurch gekennzeichnet, daß in Gegenwart oder Abwesenheit von Lösungsmitteln aus der Gruppe von gesättigten oder aromatischen Kohlenwasserstoffen oder von gesättigten oder aromatischen Halogenkohlenwasserstoffen gearbeitet wird.

4. Verfahren nach Ansprüchen 1 bis 3, dadurch gekennzeichnet, daß in den Metallocen-Verbindungen die Carbanionen CpI und CpII bzw. das π-Systems π I ein Cyclopentadienylgerüst aus der Gruppe von Cyclopentadien, substituiertem Cyclopentadien, Inden, substituiertem Inden, Fluoren und substituiertem Fluoren bedeuten, in welchen je Cyclopentadien- bzw. ankondensiertem Benzolring 1 bis 4 Substituenten aus der Gruppe von C₁-C₂₀-Alkyl, C₁-C₂₀-Alkoxy, Halogen, C₆-C₁₂-Aryl, Halogenphenyl, D und A vorliegen, wobei D und A den in Anspruch 1 genannten Bedeutungsumfang haben und wobei ankondensierte aromatische Ringe teilweise oder vollständig hydriert sein können.

5. Verfahren nach Ansprüchen 1 bis 4, dadurch gekennzeichnet, daß in den Metallocen-Verbindungen als Donoratome D Elemente aus der Gruppe N, P, As, Sb, Bi, O, S, Se, Te, F, Cl, Br, 1, bevorzugt N, P, O, S, vorliegen.

6. Verfahren nach Ansprüchen 1 bis 5, dadurch gekennzeichnet, daß in den Metallocen-Verbindungen als Akzeptoratome A Elemente aus der Gruppe B, Al, Ga, In, Tl, bevorzugt B, Al, Ga vorliegen.

7. Verfahren nach Ansprüchen 1 bis 6, dadurch gekennzeichnet, daß in den Metallocen-Verbindungen bzw. π-Komplex-Verbindungen Donor-Akzeptor-Brücken aus der Gruppe von
N → B, N→Al, P→B, P→Al, O→B, O→Al, Cl→B, Cl→Al,
C = O→B, C = O→Al
vorliegen.

8. Verfahren nach Ansprüchen 1 bis 7, dadurch gekennzeichnet, daß in den Metallocen-Verbindungen M für Sc, Y, La, Sm, Nd, Lu, Ti, Zr, Hf, Th, V, Nb, Ta, Cr, bevorzugt für Ti, Zr, Hf, V, Nb oder Ta steht.

9. Verfahren nach Ansprüchen 1 bis 8, dadurch gekennzeichnet, daß die Metallocen-Verbindungen bzw. die π-Komplex-Verbindungen gemeinsam mit einem Aluminoxan oder einem Boran oder Borat und gegebenenfalls weiteren Cokatalysatoren und/oder Metallalkylen als Katalysatorsystem eingesetzt werden.

10. Verfahren nach Ansprüchen 1 bis 9, dadurch gekennzeichnet, daß Umlagerungsprodukte von Metallocen-Verbindungen bzw. π-Komplex-Verbindungen nach Anspruch 1 unter Selbstaktivierung, bei denen nach Öffnung der D/A-Bindung das Akzeptoratom A einen X-Liganden unter Ausbildung einer zwitterionischen Metallocen-Komplex-Struktur bzw. π-Komplex-Struktur bindet, wobei beim Übergangsmetall M eine positive Ladung und beim Akzeptoratom A eine negative Ladung erzeugt wird und wobei ein weiterer X-Ligand H oder substituiertes oder nicht substituiertes C darstellt, in dessen Bindung zum Übergangsmetall M die Olefin-Insertion zur Polymerisation erfolgt, wobei bevorzugt 2 X-Liganden zu einem Chelat-Liganden verknüpft sind. eingesetzt werden.

11. Verfahren nach Ansprüchen 1 bis 10, dadurch gekennzeichnet, daß π-Komplex-Verbindungen nach Anspruch 1, in denen eines der Atome D bzw. A Teil des Ringes des zugehörigen π-Systems ist, bevorzugt daß D Teil des Ringes des zugehörigen π-Systems ist, eingesetzt werden.

12. Verfahren nach Ansprüchen 1 bis 11, dadurch gekennzeichnet, daß Reaktionsprodukte der Formeln (XIa) bis (XId) von ionisierenden Agentien mit Metallocen-Verbindungen bzw. π-Komplexen gemäß Formel (I) bzw. (XIII) 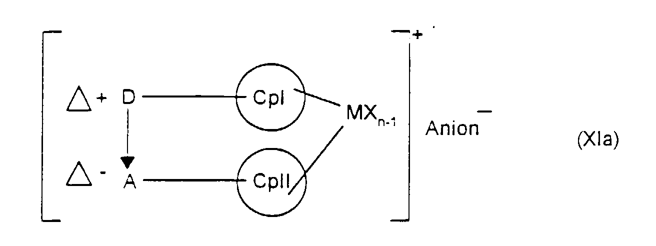 oder 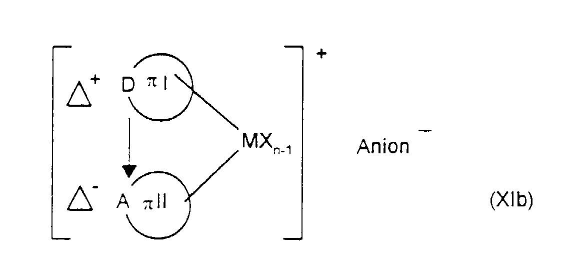 bzw. 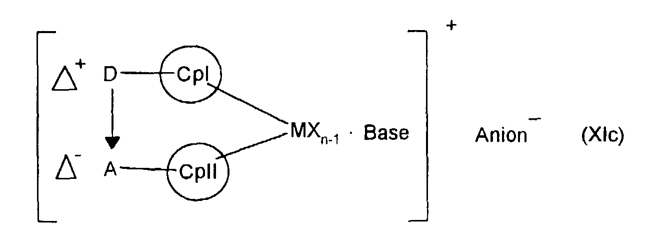 oder 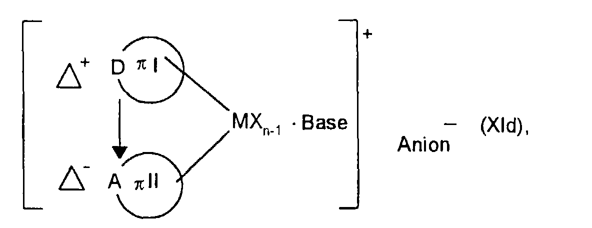 in denen
Anion für das gesamte sperrige, schlecht koordinierende Anion und Base für eine Lewis-Base stehen,
eingesetzt werden.

## Claims

1. Process for producing cyclo-olefin (co)polymers to be used for optical data memories, by (co)polymerisation of monomers selected from the group consisting of the cyclic olefins, the α-olefins with 2 or more C atoms and optionally conjugated or non-conjugated diolefins in the gas phase, melt phase, solution phase or slurry phase at -78 to +200°C and at 0.5 to 70 bar in the presence of organometallic catalysts that can be activated by co-catalysts, characterised in that metallocene compounds having the formula 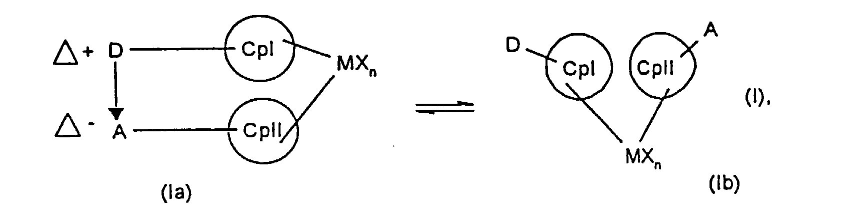 in which
CpI and CpII represent two like or different carbanions with a structure containing cyclopentadienyl, in which one to all of the H atoms may be substituted by like or different residues selected from the group consisting of linear or branched C₁-C₂₀ alkyl, which may be monosubstituted to totally substituted by halogen, monosubstituted to trisubstituted by phenyl and also monosubstituted to trisubstituted by vinyl, C₆-C₁₂ aryl, aryl halide with 6 to 12 C atoms, organometal substituents, silyl such as trimethylsilyl, ferrocenyl and also monosubstituted or disubstituted by D and A,
D signifies a donor atom which may additionally carry substituents and which, in its particular bonding state, has at least one lone electron-pair available,
A signifies an acceptor atom which may additionally carry substituents and which, in its particular bonding state, exhibits an electron-pair deficiency,
whereby D and A are linked by a reversible coordinate bond in such a manner that the donor group takes on a positive (partial) charge and the acceptor group takes on a negative (partial) charge,
M stands for a transition metal pertaining to Subgroup III, IV, V or VI of the Periodic Table of Elements (Mendeleev), including the lanthanides and actinides,
X signifies an anion equivalent and
n signifies, depending on the charge of M, the number zero, one, two, three or four,
or
π-complex compounds and, in particular, metallocene compounds of the formula 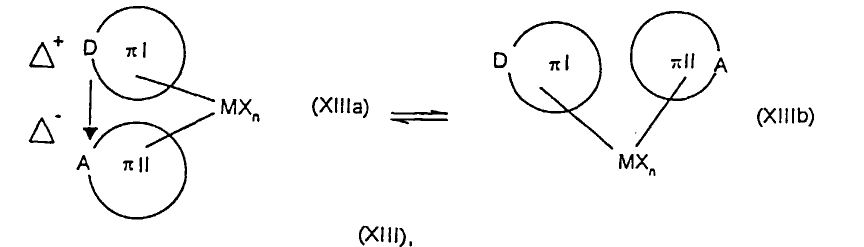 in which
πI and πII represent charged or electrically neutral π-systems that differ from one another, selected from the group consisting of substituted and non-substituted ethylene, allyl, pentadienyl, benzyl, butadiene, benzene, the cyclopentadienyl anion and the species arising as a result of replacement of at least one C atom with a heteroatom, which may be singly or doubly condensed with unsaturated or saturated five-membered or six-membered rings,
D signifies a donor atom which is a substituent of πI or part of the π-system of πI and which, in its particular bonding state, has at least one lone electron-pair available,
A signifies an acceptor atom which is a substituent of πII or part of the π-system of πII and which, in its particular bonding state, exhibits an electron-pair deficiency,
whereby D and A are linked by a reversible coordinate bond in such a manner that the donor group takes on a positive (partial) charge and the acceptor group takes on a negative (partial) charge and whereby at least one of D and A is part of the respectively associated π-system,
whereby D and A may, in turn', carry substituents,
whereby each π-system or each ring system attached by condensation may contain one or more D or A or D and A and whereby in πI and πII in the non-condensed form or in the condensed form one to all of the H atoms of the π-system may independently of one another be substituted by like or different residues selected from the group consisting of linear or branched C₁-C₂₀ alkyl, which may be monosubstituted to totally substituted by halogen, monosubstituted to trisubstituted by phenyl and also monosubstituted to trisubstituted by vinyl, C₆-C₁₂ aryl, aryl halide with 6 to 12 C atoms, organometal substituents, silyl such as trimethylsilyl, ferrocenyl and also monosubstituted or disubstituted by D and A, so that the reversible coordinate D → A bond is formed (i) between D and A, which are both parts of the respective π-system or of the ring system attached by condensation, or (ii) of which D or A is part of the π-system and the respective other substituent is part of the non-condensed π-system or of the ring system attached by condensation or (iii) both D and A are such substituents, whereby in the case of (iii) at least one additional D or A or both is/are part(s) of the π-system or of the ring system attached by condensation,
M and X have the above meaning and
n signifies, depending on the charges of M and also on those of πI and πII, the numbers zero, one, two, three or four,
are employed as organometallic catalysts.

2. Process according to Claim 1, characterised in that the metallocene compounds or the π-complex compounds are employed as catalysts in a quantity from 10¹ to 10¹² mol monomers per mol metallocene or π-complex compound.

3. Process according to Claims 1 and 2, characterised in that working takes place in the presence or absence of solvents selected from the group consisting of saturated or aromatic hydrocarbons or saturated or aromatic halogenated hydrocarbons.

4. Process according to Claims 1 to 3, characterised in that in the metallocene compounds the carbanions CpI and CpII or the π-system πI signify a cyclopentadienyl skeleton selected from the group consisting of cyclopentadiene, substituted cyclopentadiene, indene, substituted indene, fluorene and substituted fluorene, in which for every cyclopentadiene ring or benzene ring attached by condensation 1 to 4 substituents are present selected from the group consisting of C₁-C₂₀ alkyl, C₁-C₂₀ alkoxy, halogen, C₆-C₁₂ aryl, phenyl halide, D and A, whereby D and A have the range of meaning stated in Claim 1 and whereby aromatic rings attached by condensation may be partially or totally hydrated.

5. Process according to Claims 1 to 4, characterised in that elements selected from the group consisting of N, P, As, Sb, Bi, O, S, Se, Te, F, Cl, Br, I, preferably N, P, O, S, are present as donor atoms D in the metallocene compounds.

6. Process according to Claims 1 to 5, characterised in that elements selected from the group consisting of B, Al, Ga, In, Tl, preferably B, Al, Ga, are present as acceptor atoms A in the metallocene compounds.

7. Process according to Claims 1 to 6, characterised in that donor-acceptor bridges selected from the group consisting of
N → B, N → Al, P → B, P → Al, O → B, O → Al, Cl → B, Cl → Al, C=O → B, C=O → Al
are present in the metallocene compounds or π-complex compounds.

8. Process according to Claims 1 to 7, characterised in that M in the metallocene compounds stands for Sc, Y, La, Sm, Nd, Lu, Ti, Zr, Hf, Th, V, Nb, Ta, Cr, preferably for Ti, Zr, Hf, V, Nb or Ta.

9. Process according to Claims 1 to 8, characterised in that the metallocene compounds or the π-complex compounds are employed by way of catalyst system jointly with an aluminoxane or a borane or borate and optionally further co-catalysts and/or metal alkylene.

10. Process according to Claims 1 to 9, characterised in that rearrangement products of metallocene compounds or π-complex compounds according to Claim 1 subject to self-activation are employed, in which after opening of the D/A bond the acceptor atom A bonds an X ligand subject to formation of a zwitterionic metallocene-complex structure or π-complex structure, whereby a positive charge is generated in the case of the transition metal M and a negative charge is generated in the case of the acceptor atom A and whereby a further X ligand represents H or substituted or non-substituted C, in the bond of which to the transition metal M the insertion of olefin takes place for the purpose of polymerisation, whereby 2 X-ligands are preferably linked to a chelate ligand.

11. Process according to Claims 1 to 10, characterised in that π-complex compounds according to Claim 1 are employed in which one of the atoms D or A is part of the ring of the associated π-system, it being preferred that D is part of the ring of the associated π-system.

12. Process according to Claims 1 to 11, characterised in that reaction products having the formulae (XIa) to (XId) of ionising agents with metallocene compounds or π-complexes according to Formula (I) or (XIII) 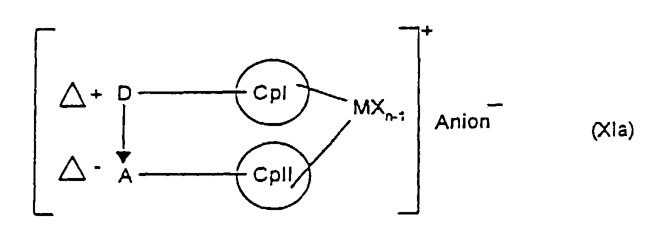 or 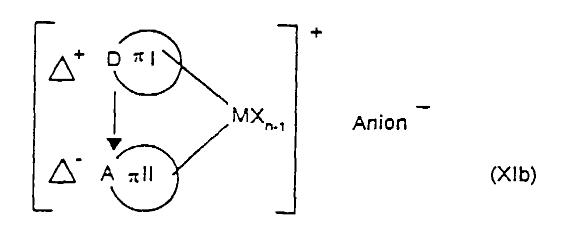 respectively 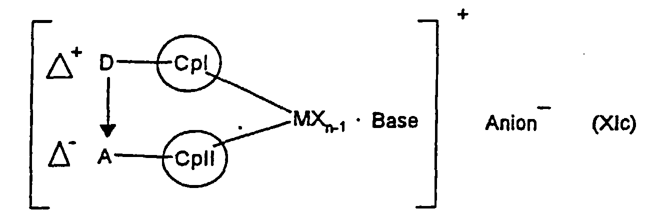 or 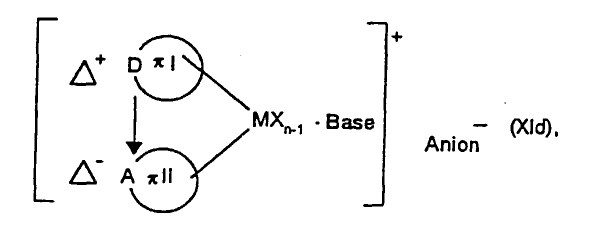 in which
Anion stands for the entire bulky, poorly coordinating anion and Base stands for a Lewis base
are employed.

## Revendications

1. Procédé pour la préparation de (co)polymères de cyclooléfines destinés à être utilisés dans des mémoires de données optiques par (co)polymérisation de monomères du groupe des oléfines cycliques, des α-oléfines à deux atomes de carbone ou plus et le cas échéant des dioléfines conjuguées ou non en phase gazeuse, en masse, en solution ou en dispersion à des températures de -78 à +200°C et des presions de 0,5 à70 bar en présence de catalyseurs organométalliques éventuellement activés par des catalyseurs auxiliaires, ce procédé se caractérisant en ce que l'on utilise en tant que catalyseurs organométalliques des métallocènes de formule 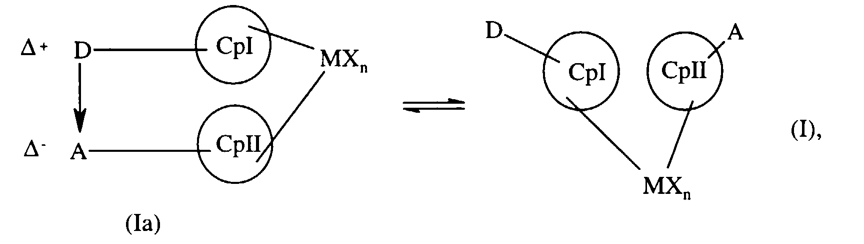 dans laquelle
CpI et CpII représentent deux carbanions identiques ou différents à structure à groupe cyclopentadiényle dans lesquels un à tous les atomes d'hydrogène peuvent être remplacés par des radicaux identiques ou différents choisis parmi les groupes alkyle linéaires ou ramifiés en C₁-C₂₀ eux-mêmes mono- à per-substitués par des halogènes ou une à trois fois par des groupes phényle ou une à trois fois par des groupes vinyle, des groupes aryle en C₆-C₁₂, des groupes halogénoaryle en C₆-C₁₂, des substituants organométalliques, des groupes silyle tels que triméthylsilyle, ferrocényle, ou une ou deux fois par D et A,
D représente un atome donateur qui peut en outre porter des substituants et qui, dans son état de liaison particulier, dispose d'au moins une paire d'électrons libre,
A représente un atome accepteur qui peut porter en outre des substituants et qui, dans son état de liaison particulier, présente un déficit d'une paire d'électrons,
D et A étant reliés par une liaison de coordination réversible en sorte que le groupe donateur prend une charge (partielle) positive et le groupe accepteur une charge (partielle) négative,
M représente un métal de transition des sous-groupes (III), (IV), (V) ou (VI) de la classification périodique des éléments (Mendelejew), y compris les lanthanides et les actinides,
X représente un équivalent d'un anion et
n selon la charge de M, est égal à 0, 1, 2, 3 ou 4,
ou bien
des complexes n et plus particulièrement des métallocènes de formule 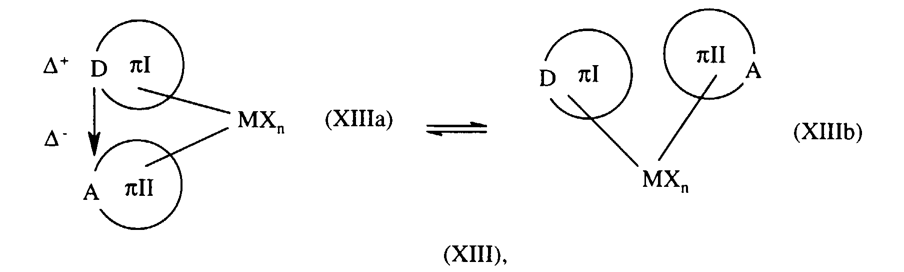 dans laquelle
πI et πII représentent des systèmes π différents, chargés ou électriquement neutres, choisis parmi éthylène substitué ou non, allyle, pentadiényle, benzyle, butadiène, benzène, l'anion cyclopentadiènyle et les systèmes correspondants obtenus en remplaçant au moins un atome de carbone par un hétéroatome, et qui peuvent être condensés une ou deux fois avec des noyaux saturés ou insaturés à cinq ou six chaînons,
D représente un atome donateur qui est substituant de πI ou partie du système π de πI et qui, dans son état de liaison particulier, dispose d'au moins une paire d'électrons libre,
A représente un atome accepteur qui est substituant de πII ou partie du système π de πII et qui, dans son état de liaison particulier, présente un déficit d'une paire d'électrons,
D et A étant reliés par une liaison de coordination réversible en sorte que le groupe donateur prend une charge (partielle) positive et le groupe accepteur une charge (partielle) négative, l'un au moins des atomes D et A étant partie du système n correspondant,
D et A pouvant eux-mêmes porter des substituants,
chaque système π et chaque système cyclique condensé pouvant porter un ou plusieurs atomes D ou A ou D et A, et
dans πI et πII sous forme non condensée ou sous forme condensée, indépendamment les des autres, un à tous les atomes d'hydrogène du système π peuvent être remplacés par des radicaux identiques ou différents choisis parmi les groupes alkyle linéaires ou ramifiés en C₁-C₂₀ eux-mêmes mono- à per-substitués par des halogènes, substitués une à trois fois par des groupes phényle ou une à trois fois par des groupes vinyle, les groupes aryle en C₆-C₁₂, halogénoaryle en C₆-C₁₂, les substituants organométalliques, les groupes silyle tels que triméthylsilyle, les groupes ferrocényle ou bien une ou deux fois par D et A, de sorte que la liaison de coordination réversible D→A est formée (i) entre D et A qui sont tous deux parties du système π correspondant ou du système cyclique condensé, ou bien (ii) entre D ou A, partie du système π et l'autre substituant du système π non condensé ou du système cyclique condensé ou bien (iii) entre D et A qui sont eux-mêmes de tels substituants, sous réserve que dans le cas (iii) au moins un autre atome D ou A ou les deux font partie du système π ou du système cyclique condensé,
M et X ont les significations indiquées ci-dessus et
n selon les charges de M et les charges de πI et πII, est égal à 0, 1, 2, 3 ou 4.

2. Procédé selon la revendication 1, caractérisé en ce que les métallocènes et complexes π sont mis en oeuvre en tant que catalyseurs en quantités correspondant à 10¹ à 10¹² mol de monomères par mol du métallocène ou du complexe π.

3. Procédé selon les revendications 1 et 2, caractérisé en ce que l'on opère en présence ou en l'absence de solvants du groupe des hydrocarbures saturés ou aromatiques ou des hydrocarbures halogénés saturés ou aromatiques.

4. Procédé selon les revendications 1 à 3, caractérisé en ce que les métallocènes, les carbanions CpI et CpII ou le système π et πI ont un squelette cyclopentadiénylique du groupe du cyclopentadiène, du cyclopentadiène substitué, de l'indène, de l'indène substitué, du fluorène et des fluorènes substitués dans lequel chaque cycle cyclopentadiène ou cycle benzénique condensé porte un à quatre substituants choisis parmi les groupes alkyle en C₁-C₂₀, alcoxy en C₁-C₂₀, les halogènes, les groupes aryle en C₆-C₁₂, halogénophényle, D et A, D et A ayant les significations indiquées dans la revendication 1 et les cycles aromatiques condensés pouvant être partiellement ou totalement hydrogénés.

5. Procédé selon les revendications 1 à 4, caractérisé en ce que dans les métallocènes, il y a en tant qu'atomes donateurs D des éléments du groupe consistant en N, P, Al, Sb, Bi, O, S, Se, Te, F, Cl, Br, I, de préférence N, P, O, S.

6. Procédé selon les revendications 1 à 5, caractérisé en ce que, dans les métallocènes, il y a en tant qu'atomes accepteurs A des éléments du groupe consistant en B, Al, Ga, In, Tl, de préférence en B, Al, Ga.

7. Procédé selon les revendications 1 à 6, caractérisé en ce que dans les métallocènes et complexes π, il y a des ponts donneur-accepteur appartenant au groupe suivant :
N → B, N→Al, P→B, P→Al, O→B, O→Al, Cl→B, Cl→Al,
C = O→B, C = O→Al

8. Procédé selon les revendications 1 à 7, caractérisé en ce que dans les métallocènes, M représente Sc, Y, La, Sm, Nd, Lu, Ti, Zr, Hf, Th, V, Nb, Ta, Cr, de préférence Ti, Zr, Hf, V, Nb ou Ta.

9. Procédé selon les revendications 1 à 8, caractérisé en ce que les métallocènes et complexes π sont mis en oeuvre avec un aluminoxane ou un borane ou borate et le cas échéant d'autres catalyseurs auxiliaires et/ou des alkylmétaux en tant que système catalyseur.

10. Procédé selon les revendications 1 à 9, caractérisé en ce que l'on met en oeuvre les produits de transposition des métallocènes ou complexes π selon la revendication 1 après auto-activation dans laquelle, après ouverture de la liaison D/A, l'atome accepteur A fixe un ligand X avec formation d'une structure zwitterionique de complexe de métallocènes ou de complexe π, avec production d'une charge positive dans le métal de transition M et d'une charge négative dans l'atome accepteur A, un autre ligand X consistant en H ou en C substitué ou non dont la liaison au métal de transition M constitue l'endroit d'insertion des oléfines pour la polymérisation, deux ligands X étant de préférence reliés avec formation d'un ligand chélaté.

11. Procédé selon les revendications 1 à 10, caractérisé en ce que l'on utilise des complexes π selon la revendication 1 dans lesquels l'un des atomes D et A fait partie du cycle du système π correspondant, et de préférence D est partie du cycle du système π correspondant.

12. Procédé selon les revendications 1 à 11, caractérisé en ce que l'on utilise des produits de réaction de formules (XIa) à (XId) entre des agents ionisants et des métallocènes ou complexes π de formules respectives (I) et (XIII) 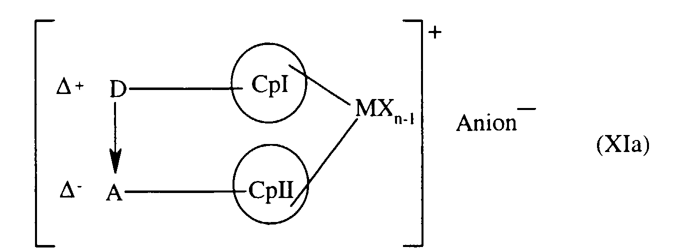 ou 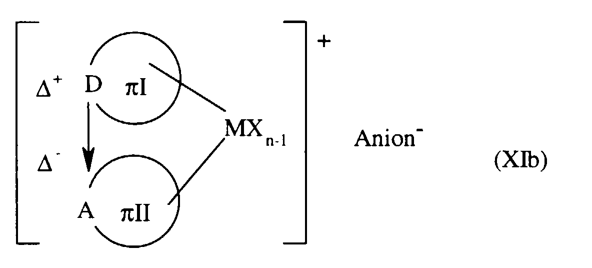 ou 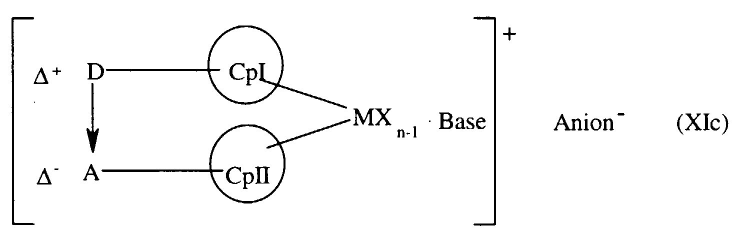 ou 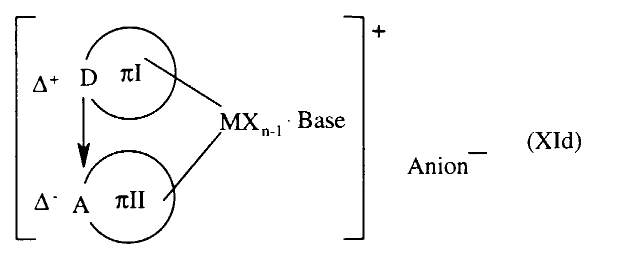 dans lesquelles
l'anion représenté est un anion globalement volumineux, mal coordinant, et la base représentée est une base de Lewis.
